(19) Europäisches Patentamt
European Patent Office
Office européen des brevets

(11) EP 4 572 277 A1

(12) EUROPEAN PATENT APPLICATION
published in accordance with Art. 153(4) EPC

(43) Date of publication:
18.06.2025 Bulletin 2025/25

(51) International Patent Classification (IPC):
H04L 27/26 (2006.01)   H04W 4/00 (2018.01)

(21) Application number: 23870813.5

(52) Cooperative Patent Classification (CPC):
H04B 7/0413; H04L 5/00; H04L 27/26; H04W 4/00;
H04W 72/0446; H04W 72/0453

(22) Date of filing: 26.09.2023

(86) International application number:
PCT/CN2023/121530

(87) International publication number:
WO 2024/067585 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.09.2022 CN 202211216529

(71) Applicant: Huawei Technologies Co., Ltd.
Shenzhen, Guangdong 518129 (CN)

(72) Inventors:
• LIU, Xiaoqing
Shenzhen, Guangdong 518129 (CN)
• YU, Zheng
Shenzhen, Guangdong 518129 (CN)
• LIU, Jianghua
Shenzhen, Guangdong 518129 (CN)

(74) Representative: MERH-IP Matias Erny Reichl
Hoffmann
Patentanwälte PartG mbB
Paul-Heyse-Straße 29
80336 München (DE)

(54) SIGNAL TRANSMISSION METHOD AND COMMUNICATION APPARATUS

(57) Embodiments of this application provide a signal transmission method and a communication apparatus, and relate to the communication field, to resolve a problem of scheduling of ports that use orthogonal codes with different lengths. The method includes: A first terminal device transmits a first reference signal on a first physical resource by using a first port. A second terminal device transmits a second reference signal on a second physical resource by using a second port. The first port uses a first orthogonal code, the second port uses a second orthogonal code, the second orthogonal code includes m code values, the first orthogonal code includes n sub-orthogonal codes, each of the n sub-orthogonal codes includes m code values, the n sub-orthogonal codes are separately orthogonal to the second orthogonal code, n is a positive integer greater than or equal to 2, and m is a positive integer greater than or equal to 2. The first reference signal is transmitted on the first physical resource, and the second reference signal is transmitted on the second physical resource.

FIG. 6

## Description

This application claims priority to Chinese Patent Application No. 202211216529.8, filed with the China National Intellectual Property Administration on September 30, 2022 and entitled "SIGNAL TRANSMISSION METHOD AND COMMUNICATION APPARATUS", which is incorporated herein by reference in its entirety.

## TECHNICAL FIELD

This application relates to the communication field, and more specifically, to a signal transmission method and a communication apparatus.

## BACKGROUND

One objective of demodulation reference signal (demodulation reference signal, DMRS) enhancement proposed in a multiple-input multiple-output (multiple-input multiple-output, MIMO) topic of 3rd Generation Partnership Project Release-18 (3GPP Rel-18) is: A quantity of orthogonal DMRS ports is increased to 24 without increasing DMRS overheads. For each DMRS type, both a maximum quantity of orthogonal ports for a single-symbol DMRS and a maximum quantity of orthogonal ports for a double-symbol DMRS are doubled. A current implementation is to increase a length of an FD-OCC. For example, an FD-OCC with a length of 2 used in Release-15, Release-16, and Release-17 is extended to an FD-OCC with a length of 4. In view of this, how to schedule DMRS ports that use orthogonal codes with different lengths becomes a problem that needs to be urgently resolved.

## SUMMARY

This application provides a signal transmission method and a communication apparatus, to resolve a problem of scheduling of ports that use orthogonal codes with different lengths.

According to a first aspect, an embodiment of this application provides a signal transmission method, applied to a network side device. The method includes:

sending first downlink control information to a first terminal device, where the first downlink control information is used by the first terminal device to determine a first port and a first physical resource, and the first port is used by the first terminal device to transmit a first reference signal on the first physical resource; sending second downlink control information to a second terminal device, where the second downlink control information is used by the second terminal device to determine a second port and a second physical resource, and the second port is used by the second terminal device to transmit a second reference signal on the second physical resource, where the first port uses a first orthogonal code, the second port uses a second orthogonal code, the second orthogonal code includes m code values, the first orthogonal code includes n sub-orthogonal codes, each of the n sub-orthogonal codes includes m code values, the n sub-orthogonal codes are separately orthogonal to the second orthogonal code, n is a positive integer greater than or equal to 2, and m is a positive integer greater than or equal to 2; and transmitting the first reference signal on the first physical resource, and transmitting the second reference signal on the second physical resource.

A physical resource may be a frequency domain resource and/or a time domain resource. The physical resource is a frequency resource. For example, the physical resource is one or more subcarriers, or one or more resource blocks. The physical resource is a time resource. For example, the physical resource is one or more OFDM symbols, or one or more slots, or one or more subframes, or one or more frames, or one or more mini-slots. The physical resource is a time resource and a frequency resource, in other words, the physical resource is a time-frequency resource. For example, the physical resource is one or more resource elements, or one CDM group, or a plurality of CDM groups.

The first port using a first orthogonal code means that a second reference signal sent by using the first port is generated based on the first orthogonal code. The second port using a second orthogonal code means that the second reference signal sent by using the second port is generated based on the first orthogonal code.

The first terminal device and the second terminal device may be terminal devices of a same protocol release, or may be terminal devices of different protocol releases. For example, the first terminal device is of a first protocol release, the second terminal device is of a second protocol release, and a release time of the first protocol release is later than a release time of the second protocol release. For another example, the first terminal device is of a first protocol release, the second terminal device is of a second protocol release, and the first protocol release is higher than the second protocol release. Specifically, for example, the first protocol release is a protocol release 18 (R18), and the second protocol release is one or more of a protocol release 15 (R15), a protocol release 16 (R16), a protocol release 17 (R17), or the like. The first terminal device and the second terminal device may be terminal devices of a same type, or may be terminal devices of different types. For example, a type of the first terminal device is an eMBB terminal, and a type of the second terminal device is a RedCap terminal. For another example, for example, the first terminal device is a terminal device having a capability of supporting a long orthogonal code, and a type of the second terminal device is a terminal device having a capability of supporting a short orthogonal code.

In the signal transmission method provided in the first aspect, because the n sub-orthogonal codes in the first orthogonal code used by the first port are separately orthogonal to the second orthogonal code used by the second port, even if the first physical resource is the same as the second physical resource, it can be ensured that both the first terminal device and the second terminal device can successfully perform reference signal demodulation or channel estimation based on the first orthogonal code and the second orthogonal code. Therefore, the signal transmission method provided in this application can implement joint scheduling between ports that use orthogonal codes with different code lengths.

In a possible implementation of the first aspect, the first orthogonal code is a first frequency division orthogonal code, and the second orthogonal code is a second frequency division orthogonal code; or the second orthogonal code is a second time division orthogonal code.

In a possible implementation of the first aspect, the first orthogonal code includes a first frequency division orthogonal code and a first time division orthogonal code, and the second orthogonal code includes a second frequency division orthogonal code and a second time division orthogonal code.

The first orthogonal code including a first frequency division orthogonal code and a first time division orthogonal code means that code values in the first orthogonal code are obtained through calculation based on a code value of the first frequency division orthogonal code and a code value of the first time division orthogonal code. Alternatively, the first orthogonal code is a superposition of the first frequency division orthogonal code and the first time division orthogonal code. Similarly, the second orthogonal code including a second frequency division orthogonal code and a second time division orthogonal code means that code values in the second orthogonal code are obtained through calculation based on a code value of the second frequency division orthogonal code and a code value of the second time division orthogonal code. Alternatively, the second orthogonal code is a superposition of the second frequency division orthogonal code and the second time division orthogonal code.

A resource mapping manner of the first orthogonal code and the second orthogonal code may be first frequency domain resource mapping and then time domain resource mapping. Alternatively, a resource mapping manner of the first orthogonal code and the second orthogonal code may be first time domain resource mapping and then frequency domain resource mapping.

In a possible implementation of the first aspect, when the first orthogonal code includes the first frequency division orthogonal code and the first time division orthogonal code, and the second orthogonal code includes the second frequency division orthogonal code and the second time division orthogonal code, the first time division orthogonal code is the same as the second time division orthogonal code, or the first frequency division orthogonal code is the same as the second frequency division orthogonal code.

In a possible implementation of the first aspect, the first physical resource and the second physical resource are same physical resources or different physical resources.

In a possible implementation, if the first physical resource and the second physical resource are the same physical resources, each of the n sub-orthogonal codes needs to (or can only) be orthogonal to the second orthogonal code.

In this embodiment of this application, the second terminal device does not expect that any one of the n sub-orthogonal codes is not orthogonal to the second orthogonal code.

In this embodiment of this application, the first terminal device does not expect that any one of the n sub-orthogonal codes is not orthogonal to the second orthogonal code.

In a possible implementation of the first aspect, the n sub-orthogonal codes in the first orthogonal code are same codes or different codes.

In a possible implementation of the first aspect, the second orthogonal code is orthogonal to (m-1) second candidate codes, each second candidate code includes m code values, and each of the n sub-orthogonal codes is any one of the (m-1) second candidate codes.

In this possible implementation, mutually orthogonal candidate codes may be specified in a corresponding protocol release. The terminal device may be capable of identifying only specified candidate codes. Therefore, the first orthogonal code is set to the first orthogonal code specified in the protocol, and all the n sub-orthogonal codes in the first orthogonal code are second candidate codes that are mutually orthogonal to the second orthogonal code and that are specified in the protocol. Therefore, demodulation performance of the first terminal device and the second terminal device is ensured.

In a possible implementation of the first aspect, m=2, n=2, the second orthogonal code is {+1, +1}, and the first orthogonal code is {+1, -1, +1, -1}, or the first orthogonal code is {+1, -1, -1, +1}.

In a possible implementation of the first aspect, m=2, n=2, the second orthogonal code is {+1, -1}, and the first orthogonal code is {+1, +1, +1, +1}, or the first orthogonal code is {+1, +1, -1, -1}.

In a possible implementation of the first aspect, m=2, n=2, the second orthogonal code is {+1, +1}, and the first orthogonal code is {+1, -1, +1, -1}; or the second orthogonal code is {+1, -1}, and the first orthogonal code is {+1, +1, +1, +1}.

In a possible implementation of the first aspect, the first terminal device is of a first protocol release, the second terminal device is of a second protocol release, and the first protocol release is higher than the second protocol release.

For example, the first protocol release is a protocol release 18 (R18), and the second protocol release is one or more of a protocol release 15 (R15), a protocol release 16 (R16), a protocol release 17 (R17), or the like.

In a possible implementation of the first aspect, both the first reference signal and the second reference signal are demodulation reference signals DMRSs.

In a possible implementation of the first aspect, the signal transmission method further includes:
receiving first capability information sent by the first terminal device, where the first capability information indicates whether the first terminal device supports scheduling of the first port and the second port on a same physical resource; or receiving second capability information sent by the second terminal device, where the second capability information indicates whether the second terminal device supports scheduling of the first port and the second port on a same physical resource.

In a possible implementation of the first aspect, if the first terminal device or the second terminal device does not support scheduling of the first port and the second port on the same physical resource, the first orthogonal code and the second orthogonal code satisfy the following condition: The n sub-orthogonal codes are separately orthogonal to the second orthogonal code.

According to a second aspect, this application provides a signal transmission method, applied to a third terminal device. The method includes:
receiving downlink control information sent by a network side device; determining a third port and a third physical resource based on the downlink control information; and transmitting a third reference signal on the third physical resource by using the third port, where a fourth physical resource carries a fourth reference signal transmitted by a fourth terminal device by using a fourth port; and the third port uses a first orthogonal code, and the fourth port uses a second orthogonal code; or the third port uses a second orthogonal code, and the fourth port uses a first orthogonal code; and the second orthogonal code includes m code values, the first orthogonal code includes n sub-orthogonal codes, each of the n sub-orthogonal codes includes m code values, the n sub-orthogonal codes are separately orthogonal to the second orthogonal code, n is a positive integer greater than or equal to 2, and m is a positive integer greater than or equal to 2.

The third terminal device is the first terminal device in the first aspect, the third port is the first port in the first aspect, the first reference signal is the first reference signal in the first aspect, and the first physical resource is the first physical resource in the first aspect. The fourth terminal device is the second terminal device in the second aspect, the fourth port is the second port in the second aspect, the second reference signal is the second reference signal in the second aspect, and the second physical resource is the second physical resource in the second aspect. Alternatively, the fourth terminal device is the first terminal device in the first aspect, the fourth port is the first port in the first aspect, the first reference signal is the first reference signal in the first aspect, and the first physical resource is the first physical resource in the first aspect. The third terminal device is the second terminal device in the second aspect, the third port is the second port in the second aspect, the second reference signal is the second reference signal in the second aspect, and the second physical resource is the second physical resource in the second aspect.

In the signal transmission method provided in the second aspect, when the third terminal device transmits the third reference signal on the third physical resource by using the third port, and the fourth terminal device transmits the fourth reference signal by using the fourth port, because the third port and the fourth port respectively use the first orthogonal code and the second orthogonal code, and the n sub-orthogonal codes in the first orthogonal code are separately orthogonal to the second orthogonal code, even if the third physical resource is the same as the fourth physical resource, it can be ensured that both the third terminal device and the fourth terminal device can successfully perform reference signal demodulation based on the first orthogonal code and the second orthogonal code. Therefore, the signal transmission method provided in this application can implement joint scheduling between ports that use orthogonal codes with different code lengths.

In a possible implementation of the second aspect, the first orthogonal code is a first frequency division orthogonal code, and the second orthogonal code is a second frequency division orthogonal code; or the second orthogonal code is a second time division orthogonal code.

In a possible implementation of the second aspect, the first orthogonal code includes a first frequency division orthogonal code and a first time division orthogonal code, and the second orthogonal code includes a second frequency division orthogonal code and a second time division orthogonal code.

In a possible implementation of the second aspect, the first time division orthogonal code is the same as the second time division orthogonal code; or the first frequency division orthogonal code is the same as the second frequency division orthogonal code.

In a possible implementation of the second aspect, the third physical resource and the fourth physical resource are same physical resources or different physical resources.

In a possible implementation, if the third physical resource and the fourth physical resource are the same physical resources, each of the n sub-orthogonal codes needs to (or can only) be orthogonal to the second orthogonal code.

In this embodiment of this application, the third terminal device does not expect that any one of the n sub-orthogonal codes is not orthogonal to the second orthogonal code.

In this embodiment of this application, the fourth terminal device does not expect that any one of the n sub-orthogonal codes is not orthogonal to the second orthogonal code.

In a possible implementation of the second aspect, the n sub-orthogonal codes in the first orthogonal code are same codes or different codes.

In a possible implementation of the second aspect, the second orthogonal code is orthogonal to (m-1) second candidate codes, each second candidate code includes m code values, and each of the n sub-orthogonal codes is any one of the (m-1) second candidate codes.

In a possible implementation of the second aspect, m=2, n=2, the second orthogonal code is {+1, +1}, and the first orthogonal code is {+1, -1, +1, -1}, or the first orthogonal code is {+1, -1, -1, +1}.

In a possible implementation of the second aspect, m=2, n=2, the second orthogonal code is {+1, -1}, and the first orthogonal code is {+1, +1, +1, +1}, or the first orthogonal code is {+1, +1, -1, -1}.

In a possible implementation of the second aspect, m=2, n=2, the second orthogonal code is {+1, +1}, and the first orthogonal code is {+1, -1, +1, -1}; or the second orthogonal code is {+1, -1}, and the first orthogonal code is {+1, +1, +1, +1}.

In a possible implementation of the second aspect, the first terminal device is of a first protocol release, the second terminal device is of a second protocol release, and the first protocol release is higher than the second protocol release.

In a possible implementation of the second aspect, both the third reference signal and the fourth reference signal are demodulation reference signals DMRSs.

In a possible implementation of the second aspect, the method further includes:
sending capability information to the network side device, where the capability information indicates whether the third terminal device supports scheduling of the third port and the fourth port on a same physical resource.

For beneficial effects and explanations of the possible implementations of the second aspect, refer to the beneficial effects and explanations of the possible implementations of the first aspect. Details are not described herein again.

According to a third aspect, a communication apparatus is provided, and is configured to perform the steps in the first aspect or any possible implementation of the first aspect.

In a possible implementation of the third aspect, the communication apparatus includes a unit configured to perform the method according to any one of the first aspect or the possible implementations of the first aspect.

In a possible implementation of the third aspect, the communication apparatus includes at least one processor and a memory, and the at least one processor is configured to perform the method according to any one of the first aspect or the possible implementations of the first aspect.

According to a fourth aspect, a communication apparatus is provided, and is configured to perform the steps in the second aspect or any possible implementation of the second aspect.

In a possible implementation of the fourth aspect, the communication apparatus includes a unit configured to perform the method according to any one of the second aspect or the possible implementations of the second aspect.

In a possible implementation of the fourth aspect, the communication apparatus includes at least one processor and a memory, and the at least one processor is configured to perform the method according to any one of the second aspect or the possible implementations of the second aspect.

In a possible implementation of the fourth aspect, the communication apparatus includes at least one processor and a memory, and the at least one processor is configured to perform the method according to any one of the second aspect or the possible implementations of the second aspect.

According to a fifth aspect, a terminal device is provided. The terminal device includes the communication apparatus provided in the fourth aspect.

According to a sixth aspect, a network side device is provided. The network side device includes the communication apparatus provided in the third aspect.

According to a seventh aspect, a computer program product is provided. The computer program product includes a computer program. When the computer program is executed by a processor, the method according to any one of the foregoing aspects or the possible implementations of the foregoing aspects is performed.

According to an eighth aspect, a computer-readable storage medium is provided. The computer-readable storage medium stores a computer program. When the computer program is executed, the method according to any one of the foregoing aspects or the possible implementations of the foregoing aspects is performed.

According to a ninth aspect, a communication system is provided. The communication system includes the foregoing terminal device and the foregoing network side device.

According to a tenth aspect, a chip is provided. The chip includes a processor, configured to: invoke a computer program from a memory and run the computer program, to enable a communication device on which the chip is installed to perform the method according to any one of the foregoing aspects or the possible implementations of the foregoing aspects.

## BRIEF DESCRIPTION OF DRAWINGS

FIG. 1 is a diagram of time-frequency resources to which a DMRS sequence of a single-symbol type-1 DMRS is mapped;
FIG. 2 is a diagram of time-frequency resources to which a DMRS sequence of a double-symbol type-1 DMRS is mapped;
FIG. 3 is a diagram of time-frequency resources to which a DMRS sequence of a single-symbol type-2 DMRS is mapped;
FIG. 4 is a diagram of time-frequency resources to which a DMRS sequence of a double-symbol type-2 DMRS is mapped;
FIG. 5 is a diagram of an architecture of a communication system applicable to an embodiment of this application;
FIG. 6 is a schematic interaction diagram of an example of a signal transmission method according to an embodiment of this application;
FIG. 7 is a block diagram of an example of a communication apparatus according to an embodiment of this application;
FIG. 8 is a block diagram of another example of a communication apparatus according to an embodiment of this application;
FIG. 9 is a block diagram of still another example of a communication apparatus according to an embodiment of this application;
FIG. 10 is a block diagram of yet another example of a communication apparatus according to an embodiment of this application;
FIG. 11 is a block diagram of a terminal device according to an embodiment of this application; and
FIG. 12 is a block diagram of a network device according to an embodiment of this application.

## DESCRIPTION OF EMBODIMENTS

The following describes technical solutions of this application with reference to accompanying drawings.
In descriptions of embodiments of this application, "/" indicates "or" unless otherwise specified. For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, in the descriptions of embodiments of this application, "a plurality of" means two or more.
The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.
Technical solutions of embodiments of this application may be applied to various communication systems, for example, a global system for mobile communications (Global System for Mobile communications, GSM), a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunications System, UMTS), a worldwide interoperability for microwave access (Worldwide Interoperability for Microwave Access, WiMAX) communication system, a 5th generation (5th Generation, 5G) system, a new radio (New Radio, NR) system, or another type of future communication system.
A terminal device in embodiments of this application may be user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal device in a future 5G network, or a terminal device in a future evolved public land mobile network (Public Land Mobile Network, PLMN). This is not limited in embodiments of this application.
A network side device in embodiments of this application may be a device used to communicate with the terminal device. The network side device may be a base station (Base Transceiver Station, BTS) in a global system for mobile communications (Global System for Mobile communications, GSM) or a code division multiple access (Code Division Multiple Access, CDMA) system; may be a NodeB (NodeB, NB) in a wideband code division multiple access (Wideband Code Division Multiple Access, WCDMA) system; may be an evolved NodeB (Evolved NodeB, eNB or eNodeB) in an LTE system; or may be a radio controller in a cloud radio access network (Cloud Radio Access Network, CRAN) scenario. Alternatively, the network side device may be a relay station, an access point, a vehicle-mounted device, a wearable device, a network side device in a future 5G network, a network side device in a future evolved PLMN network or another type of future communication system, or the like. This is not limited in embodiments of this application.

In embodiments of this application, the terminal device or the network side device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code for the method provided in embodiments of this application can be run to perform communication according to the method provided in embodiments of this application. For example, the method provided in embodiments of this application may be performed by the terminal device or the network side device, or a functional module that is in the terminal device or the network side device and that can invoke and execute a program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry instructions and/or data.

In an NR system, based on a mapping manner of a DMRS on a frequency domain resource, there are the following two DMRS types: a type-1 (configuration type 1) DMRS and a type-2 (configuration type 2) DMRS (configured by using a higher layer parameter dmrs-Type). In embodiments of this application, the DMRS type may also be referred to as a DMRS configuration type.

For the type-1 (configuration type 1) DMRS, in frequency domain, a DMRS sequence is mapped to one subcarrier at an interval of one subcarrier (or the DMRS sequence is mapped to one of every two subcarriers).

For the type-2 (configuration type 2) DMRS, in frequency domain, a DMRS sequence is mapped to two contiguous subcarriers at an interval of four subcarriers (or the DMRS sequence is mapped to two contiguous subcarriers in every six subcarriers).

Based on a quantity of orthogonal frequency division multiplexing (orthogonal frequency division multiplexing, OFDM) symbols occupied by one DMRS sequence on a time domain resource, DMRSs are classified into a single-symbol DMRS and a double-symbol DMRS (determined based on a higher layer parameter maxLength and/or associated DCI). Based on positions of DMRSs on time domain resources, the DMRSs are classified into a front-loaded (front-loaded) DMRS and an additional (additional) DMRS. A frequency domain mapping manner and a sequence generation manner of the front-loaded DMRS are completely the same as those of the additional DMRS.

Based on the foregoing classification, maximum quantities of orthogonal DMRS ports supported in current NR protocol releases (Release-15, Release-16, and Release-17) are shown in Table 1.

Table 1: Maximum quantities of orthogonal DMRS ports supported in current NR protocols

|  | Type-1 DMRS | Type-2 DMRS |
|---|---|---|
| Single-symbol | 4 | 6 |
| Double-symbol | 8 | 12 |

To be specific, for the single-symbol type-1 DMRS, the maximum quantity of supported orthogonal DMRS ports is 4. For the double-symbol type-1 DMRS, the maximum quantity of supported orthogonal DMRS ports is 8. For the single-symbol type-2 DMRS, the maximum quantity of supported orthogonal DMRS ports is 6. For the double-symbol type-2 DMRS, the maximum quantity of supported orthogonal DMRS ports is 12. In embodiments of this application, a quantity of orthogonal DMRS ports may be understood as a quantity of orthogonal DMRS sequences.

The following specifically describes a mapping manner of each type of DMRS and a method for calculating a maximum quantity of orthogonal DMRS ports.

First, a theoretical basis: a multiplexing technology, for implementing orthogonality between a plurality of ports of a DMRS is briefly described.

In embodiments of this application, the multiplexing technology may be understood as a technology in which a plurality of signals from a plurality of channels are combined on a transmission path of a transmit end, and the plurality of channels are demultiplexed at a receive end to restore each signal. Channel transmission efficiency can be effectively improved by using the multiplexing technology. For example, by using the multiplexing technology, the plurality of signals may be combined at the transmit end (for example, a mixer used by a broadcasting and television front end) for transmission on a dedicated physical channel. Then, the receive end separates a combined signal.

The multiplexing technology in embodiments of this application mainly includes frequency division multiplexing (frequency division multiplexing, FDM), time division multiplexing (time division multiplexing, TDM), and code division multiplexing (code division multiplexing, CDM).

For the FDM, a carrier bandwidth is divided into subchannels of different frequency bands, and all users may simultaneously perform transmission of respective signals on different subchannels. Therefore, all the users using the FDM occupy different bandwidth resources at same time.

For the TDM, a channel is divided into different time segments based on time, and all users occupy same frequency bandwidths at different time.

For the CDM, all users may perform communication on same frequency bands at same time. Because the users use different specially selected code types, no interference is caused between the users. For example, an orthogonal cover code (Orthogonal Cover Code, OCC) or the like may be used to implement code division multiplexing.

Currently, in the current NR protocols, the FDM, a frequency division orthogonal cover code (frequency division orthogonal cover code, FD-OCC), and a time division orthogonal cover code (time division orthogonal cover code, TD-OCC) are jointly used to multiplex orthogonal ports of the DMRS. The following separately describes multiplexing of the type-1 DMRS and multiplexing of the type-2 DMRS.

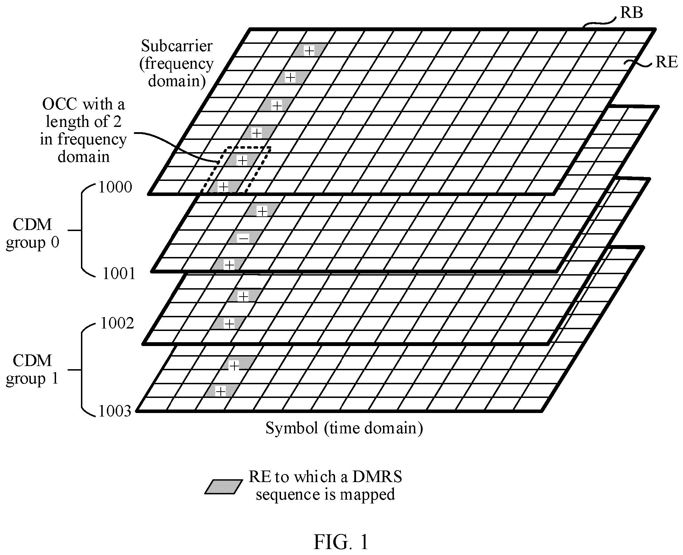

For the single-symbol type-1 DMRS, as shown in FIG. 1, in frequency domain, a DMRS sequence is mapped to one subcarrier at an interval of one subcarrier (or the DMRS sequence is mapped to one of every two subcarriers). In time domain, the DMRS sequence is mapped to one symbol. Therefore, a maximum of two orthogonal DMRS ports can be multiplexed in frequency domain in an FDM manner.

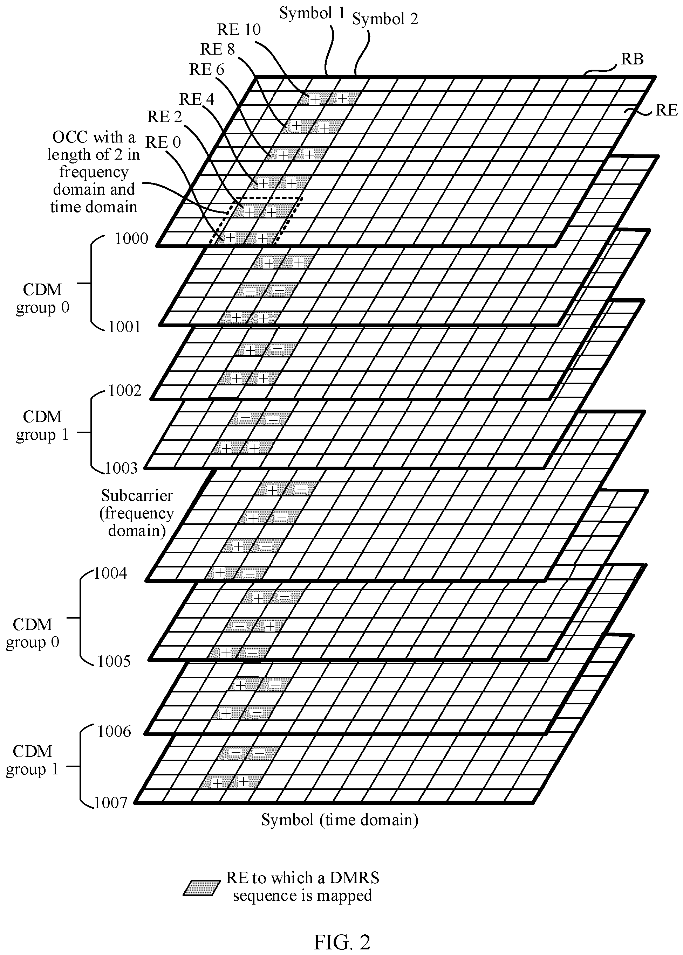

For the double-symbol type-1 DMRS, as shown in FIG. 2, in frequency domain, a DMRS sequence is mapped to one subcarrier at an interval of one subcarrier (or the DMRS sequence is mapped to one of every two subcarriers). In time domain, the DMRS sequence is mapped to two symbols. Therefore, a maximum of four orthogonal DMRS ports can be multiplexed in frequency domain in an FDM manner.

It should be understood that, in embodiments of this application, DMRS sequences mapped at same time and to same frequency resources belong to a same CDM group (CDM group). In other words, one CDM group indicates one physical resource (time-frequency resource) or one group of physical resources, and different CDM groups correspond to different physical resources.

For example, as shown in FIG. 1, a DMRS sequence mapped to a port 1000 (that is, the port has a port number being 1000) and a DMRS sequence mapped to a port 1001 occupy same time-frequency resources. In other words, the port 1000 (which may also be referred to as a DMRS port 1000) and the port 1001 (which may also be referred to as a DMRS port 1001) belong to a same CDM group: a CDM group 0. Similarly, a port 1002 and a port 1003 belong to a CDM group 1. In other words, two CDM groups are supported in the mapping manner.

For another example, as shown in FIG. 2, a port 1000, a port 1001, a port 1004, and a port 1005 belong to a same CDM group: a CDM group 0, and a port 1002, a port 1003, a port 1006, and a port 1007 belong to a same CDM group: a CDM group 1. In other words, two CDM groups are supported in the mapping manner.

Because different CDM groups correspond to different frequency domain resources, orthogonal multiplexing of DMRS ports included in the different CDM groups can be implemented in the FDM manner. For example, orthogonal multiplexing of the port 1000 and the port 1002, orthogonal multiplexing of the port 1001 and the port 1003, orthogonal multiplexing of the port 1004 and the port 1006, orthogonal multiplexing of the port 1005 and the port 1007, or the like may be implemented in the FDM manner.

Because a same CDM group corresponds to same frequency domain resources, orthogonality of a plurality of ports is implemented in a code division multiplexing manner between different DMRS ports in the same CDM group (that is, in a case in which different DMRS sequences are mapped to same time-frequency resources).

Specifically, in code domain, the current protocol releases (Release-15, Release-16, and Release-17) support an FD-OCC with a length of 2. Therefore, on same time-frequency resources, a maximum of two orthogonal DMRS ports can be multiplexed in the code division multiplexing manner.

For example, for the single-symbol type-1 DMRS, as shown in FIG. 1, orthogonal codes that are of the port 1000 and that are mapped to corresponding resource elements (resource elements, REs) or subcarriers included in one resource block (resource block, RB) are sequentially {+1, +1, +1, +1, +1, +1}, and orthogonal codes that are of the port 1001 and that are mapped to corresponding REs or subcarriers included in one RB are {+1, -1, +1, -1, +1, -1}. For the port 1000 and the port 1001 in an integer quantity of RBs, DMRS sequences are orthogonal in code domain.

For the double-symbol type-1 DMRS, as shown in FIG. 2, on same time-frequency resources, a maximum of four orthogonal DMRS ports can be multiplexed in a joint manner of the FD-OCC and the TD-OCC. For example, for the four ports 1000, 1001, 1004, and 1005 corresponding to the CDM group 0, a case of an orthogonal code sequence that is of each port and that is mapped to corresponding REs in one RB are shown in FIG. 2.

Table 2: Diagram of an orthogonal code of a double-symbol type-1 DMRS

|  | Port 1000 | | Port 1001 | | Port 1004 | | Port 1005 | |
|---|---|---|---|---|---|---|---|---|
|  | Symbol 1 | Symbol 2 | Symbol 1 | Symbol 2 | Symbol 1 | Symbol 2 | Symbol 1 | Symbol 2 |
| Subcarrier 0 | +1 | +1 | +1 | +1 | +1 | -1 | +1 | -1 |
| Subcarrier 2 | +1 | +1 | -1 | -1 | +1 | -1 | -1 | +1 |
| Subcarrier 4 | +1 | +1 | +1 | +1 | +1 | -1 | +1 | -1 |
| Subcarrier 6 | +1 | +1 | -1 | -1 | +1 | -1 | -1 | +1 |
| Subcarrier 8 | +1 | +1 | +1 | +1 | +1 | -1 | +1 | -1 |
| Subcarrier 10 | +1 | +1 | -1 | -1 | +1 | -1 | -1 | +1 |

It should be understood that the orthogonal code sequence shown in Table 2 includes the FD-OCC and the TD-OCC. A subcarrier corresponds to an FD-OCC sequence value on a frequency domain resource, and an OFDM symbol corresponds to a TD-OCC sequence value on a time domain resource. For example, as shown in Table 2, the DMRS sequence on the port 1000 remains orthogonal to that on the port 1001 by using the FD-OCC, and the DMRS sequence on the port 1000 remains orthogonal to that on the port 1004 by using the TD-OCC.

In conclusion, for the single-symbol type-1 DMRS, multiplexing of a maximum of four orthogonal ports: the port 1000 to the port 1003, is supported by using the FDM and the FD-OCC. For the double-symbol type-1 DMRS, multiplexing of a maximum of eight orthogonal ports: the port 1000 to the port 1007, is supported by using the FDM, the FD-OCC, and the TD-OCC.

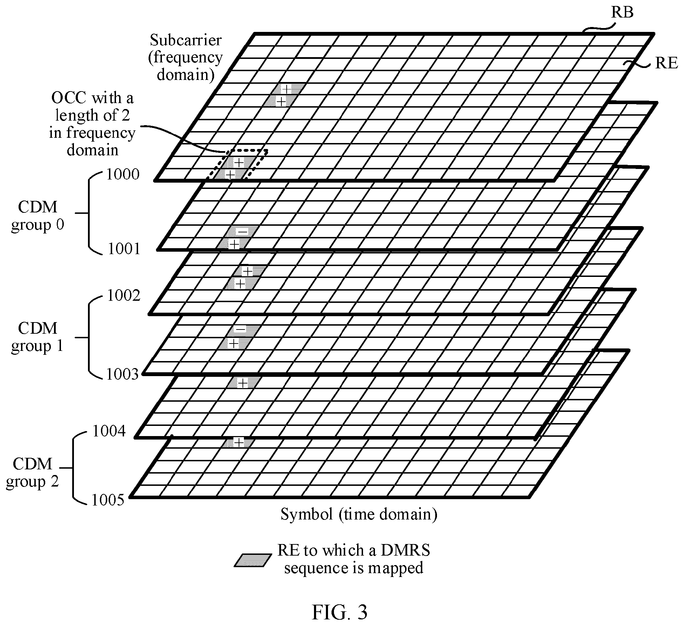

For the single-symbol type-2 DMRS, as shown in FIG. 3, in frequency domain, a DMRS sequence is mapped to two contiguous subcarriers at an interval of four subcarriers (or the DMRS sequence is mapped to two contiguous subcarriers in every six subcarriers). In time domain, the DMRS sequence is mapped to one symbol. In frequency domain, a maximum of three orthogonal DMRS ports can be multiplexed in the FDM manner. In other words, three CDM groups are supported. For example, as shown in FIG. 3, a port 1000 and a port 1001 belong to a same CDM group: a CDM group 0, a port 1002 and a port 1003 belong to a same CDM group: a CDM group 1, and a port 1004 and a port 1005 belong to a same CDM group: a CDM group 2. In other words, the mapping manner supports the three CDM groups.

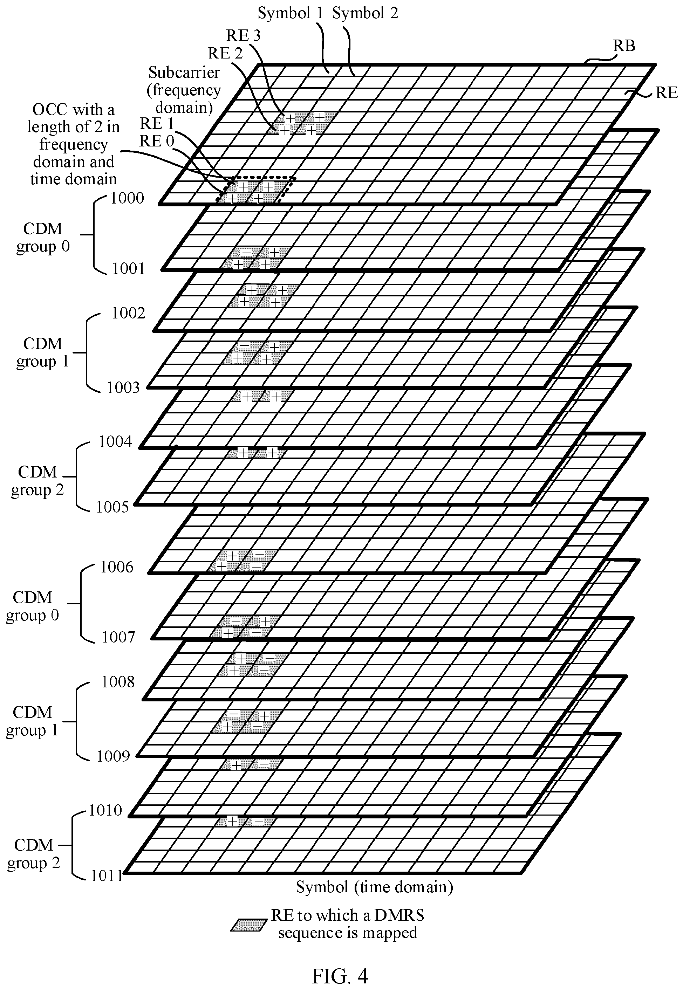

For the double-symbol type-2 DMRS, as shown in FIG. 4, a DMRS sequence is mapped to two contiguous subcarriers at an interval of four subcarriers (or the DMRS sequence is mapped to two contiguous subcarriers in every six subcarriers). In time domain, the DMRS sequence is mapped to two symbols. In frequency domain, a maximum of three orthogonal DMRS ports can also be multiplexed in the FDM manner. In other words, three CDM groups are supported. For example, as shown in FIG. 4, a port 1000, a port 1001, a port 1006, and a port 1007 belong to a same CDM group: a CDM group 0, a port 1002, a port 1003, a port 1008, and a port 1009 belong to a same CDM group: a CDM group 1, and a port 1004, a port 1005, a port 1010, and a port 1011 belong to a same CDM group: a CDM group 2. In other words, the mapping manner supports the three CDM groups.

In code domain, the current protocol releases (Release-15, Release-16, and Release-17) support an FD-OCC with a length of 2. Therefore, on same time-frequency resources, a maximum of two orthogonal DMRS ports can be multiplexed in the code division multiplexing manner.

For example, for the single-symbol type-2 DMRS, as shown in FIG. 3, orthogonal codes that are of the port 1000 and that are mapped to corresponding REs or subcarriers included in one RB are sequentially {+1, +1, +1, +1}, and orthogonal codes that are of the port 1001 and that are mapped to corresponding REs or subcarriers included in one RB are sequentially {+1, -1, +1, -1}. For the port 1000 and the port 1001 in an integer quantity of RBs, DMRS sequences are orthogonal in code domain.

For the double-symbol type-2 DMRS, as shown in FIG. 4, on same time-frequency resources, a maximum of four orthogonal DMRS ports can be multiplexed in the joint manner of the FD-OCC and the TD-OCC. For example, for the four ports 1000, 1001, 1006, and 1007 corresponding to the CDM group 0, a case of an orthogonal code sequence that is of each port and that is mapped to corresponding REs in one RB is shown in Table 3.

Table 3: Diagram of an orthogonal code of a double-symbol type-2 DMRS

| | Port 1000 | | Port 1001 | | Port 1006 | | Port 1007 | |
|---|---|---|---|---|---|---|---|---|
| | Symbol 1 | Symbol 2 | Symbol 1 | Symbol 2 | Symbol 1 | Symbol 2 | Symbol 1 | Symbol 2 |
| Subcarrier 0 | +1 | +1 | +1 | +1 | +1 | -1 | +1 | -1 |
| Subcarrier 1 | +1 | +1 | -1 | +1 | +1 | -1 | -1 | +1 |
| Subcarrier 2 | +1 | +1 | +1 | +1 | +1 | -1 | +1 | -1 |
| Subcarrier 3 | +1 | +1 | -1 | +1 | +1 | -1 | -1 | +1 |

It should be understood that the orthogonal code sequence shown in Table 3 includes the FD-OCC and the TD-OCC. A subcarrier corresponds to an FD-OCC sequence value on a frequency domain resource, and an OFDM symbol corresponds to a TD-OCC sequence value on a time domain resource. For example, as shown in Table 3, the DMRS sequence on the port 1000 remains orthogonal to that on the port 1001 by using the FD-OCC, and the DMRS sequence on the port 1000 remains orthogonal to that on the port 1006 by using the TD-OCC.

In conclusion, for the single-symbol type-2 DMRS, multiplexing of a maximum of six orthogonal ports: the port 1000 to the port 1005, is supported by using the FDM and the FD-OCC. For the double-symbol type-2 DMRS, multiplexing of a maximum of 12 orthogonal ports: the port 1000 to the port 1011, is supported by using the FDM, the FD-OCC, and the TD-OCC.

The following specifically describes a mapping relationship between a DMRS port and an OCC code.

Assuming that $r(m)$ represents a DMRS sequence, and $\beta_{\text{PDSCH}}^{\text{DMRS}}$ represents a transmission power scaling factor, mapping from the DMRS sequence to a physical resource, that is, mapping from the DMRS sequence to a $(k,l)_{p,\mu}$th RE, may satisfy Formula (1):

$$a_{k,l}^{(p,\mu)} = \beta_{\text{PDSCH}}^{\text{DMRS}} w_{\text{f}}\left(k'\right) w_{\text{t}}\left(l'\right) r\left(2n+k'\right) \quad (1)$$

In Formula (1), $a_{k,l}^{(p,\mu)}$ represents a DMRS signal obtained by mapping the DMRS sequence to the $(k,l)_{p,\mu}$th RE, $k$ represents a frequency domain resource index, $l$ represents a time domain resource index, $w_{\text{f}}(k')$ represents an FD-OCC sequence value, namely, a frequency domain mask sequence value, $w_{\text{t}}(l')$ represents a TD-OCC sequence value, namely, a time domain mask sequence value. A value of $k'$ is 0 or 1. $l=\bar{l}+l'$, and a value of n is 0, 1, 2, ..., or the like. In other words, the value of n may be an integer.

$k$ may satisfy Formula (2):

$$k = \begin{cases} 4n + 2k' + \Delta & \text{type-1} \\ 6n + k' + \Delta & \text{type-2} \end{cases} \quad (2)$$

In Formula (2), type-1 represents the type-1 DMRS, type-2 represents the type-2 DMRS, and $\Delta$ represents a quantity of subcarriers.

For values of all parameters in Formula (1), different types of DMRSs may be determined based on different tables. In addition, an RE (or a subcarrier) to which a DMRS is mapped needs to be included in a common resource block (common resource block, CRB) allocated for data transmission. For example, an RE to which a downlink DMRS is mapped is included in a CRB allocated for physical downlink shared channel (physical downlink shared channel, PDSCH) transmission. For another example, an RE to which an uplink DMRS is mapped is included in a CRB allocated for physical uplink shared channel (physical uplink shared channel, PUSCH) transmission.

For example, Table 4 shows port mapping parameters of a downlink type-1 DMRS. $p$ represents a downlink DMRS port number.

Table 4: Port mapping parameter of a type-1 DMRS for a PDSCH

| p | Number of a CDM group | $\Delta$ | $w_f(k')$ | | $w_t(l')$ | |
|---|---|---|---|---|---|---|
| | | | k'=0 | k'=1 | l'=0 | l'=1 |
| 1000 | 0 | 0 | +1 | +1 | +1 | +1 |
| 1001 | 0 | 0 | +1 | -1 | +1 | +1 |
| 1002 | 1 | 1 | +1 | +1 | +1 | +1 |
| 1003 | 1 | 1 | +1 | -1 | +1 | +1 |
| 1004 | 0 | 0 | +1 | +1 | +1 | -1 |
| 1005 | 0 | 0 | +1 | -1 | +1 | -1 |
| 1006 | 1 | 1 | +1 | +1 | +1 | -1 |
| 1007 | 1 | 1 | +1 | -1 | +1 | -1 |

Table 5 shows port mapping parameters of a downlink type-2 DMRS. *p* represents a downlink DMRS port number.

Table 5: Port mapping parameter of a type-2 DMRS for a PDSCH

| p | Number of a CDM group | $\Delta$ | $w_f(k')$ | | $w_t(l')$ | |
|---|---|---|---|---|---|---|
| | | | k'=0 | k'=1 | l'=0 | l'=1 |
| 1000 | 0 | 0 | +1 | +1 | +1 | +1 |
| 1001 | 0 | 0 | +1 | -1 | +1 | +1 |
| 1002 | 1 | 2 | +1 | +1 | +1 | +1 |
| 1003 | 1 | 2 | +1 | -1 | +1 | +1 |
| 1004 | 2 | 4 | +1 | +1 | +1 | +1 |
| 1005 | 2 | 4 | +1 | -1 | +1 | +1 |
| 1006 | 0 | 0 | +1 | +1 | +1 | -1 |
| 1007 | 0 | 0 | +1 | -1 | +1 | -1 |
| 1008 | 1 | 2 | +1 | +1 | +1 | -1 |
| 1009 | 1 | 2 | +1 | -1 | +1 | -1 |
| 1010 | 2 | 4 | +1 | +1 | +1 | -1 |
| 1011 | 2 | 4 | +1 | -1 | +1 | -1 |

It should be understood that, for a reference point of *k*, if a corresponding physical downlink control channel (physical downlink control channel, PDCCH) is associated with a common search space of a control resource set (CORESET) 0 and a type-0 PDCCH (Type0-PDCCH), and corresponds to a system information radio network temporary identifier (system information radio network temporary identifier, SI-RNTI), the reference point of *k* is a subcarrier 0 in a resource block with a lowest number in the CORESET 0. Otherwise, the reference point of *k* is a subcarrier 0 of a CRB 0.
It may be understood that the DMRS sequence is a long sequence generated on an entire carrier bandwidth, and an RE to which a DMRS is mapped is determined based on a CRB allocated for PDSCH transmission.
It should be further understood that a mapping manner of an uplink DMRS port is similar to a mapping manner of a downlink DMRS port. In the foregoing table, mapping of an uplink DMRS port number may be obtained by subtracting 1000 from the downlink DMRS port number.
The following specifically describes a DMRS port indication manner.
As shown in Table 4 and Table 5, different DMRS ports correspond to different DMRS mapping parameters. The network side device needs to indicate a DMRS port by using an antenna port (Antenna port(s)) field included in downlink control information (downlink control formation, DCI). In this way, the terminal device can determine a port used for DMRS transmission and a corresponding mapping parameter (that is, $w_f(k')$ and $w_t(l')$).
The antenna port field includes an indication of "a quantity of CDM groups without data (number of CDM group(s) without data)", indicating a quantity of CDM groups that are not used by the terminal device to perform data transmission, or a CDM group that cannot multiplex data. Further, the "quantity of CDM groups without data" indicates a quantity of CDM groups that are not used by the terminal device to perform data transmission on a corresponding symbol. A value indicated by the "quantity of CDM groups without data" may be 1, 2, or 3. If the value indicated by the "quantity of CDM groups without data" is 1, it indicates that the CDM group 0 has no data. If the value indicated by the "quantity of CDM groups without data" is 2, it indicates that the CDM group 0 and the CDM group 1 have no data. If the value indicated by the "quantity of CDM groups without data" is 3, it indicates the CDM group 0, the CDM group 1, and the CDM group 2 have no data.

For DMRSs that are of different types and that occupy different symbol lengths, correspondences between DMRS ports and mapping parameters are different. Therefore, the antenna port field in the DCI may be defined in a plurality of tables, to correspond to the DMRSs that are of different types and that occupy different symbol lengths. A specific indication method is as follows.

For example, when the DMRS type is configured as type-1 (dmrs-Type=1 or dmrs-Type is not configured), and a symbol occupied by a longest DMRS is configured as one symbol (maxLength=1 or maxLength is not configured), an indication relationship of the antenna port field is shown in Table 6.

Table 6: Antenna port indication table (dmrs-Type=1 and maxLength=1)

| One codeword (one codeword): codeword 0 enabled (codeword 0 enable), and codeword 1 disabled (codeword 1 disable) | | |
|---|---|---|
| Value (value) | Quantity of CDM groups without data (number of CDM group(s) without data) | DMRS port (DMRS port(s)) |
| 0 | 1 | 0 |
| 1 | 1 | 1 |
| 2 | 1 | 0, 1 |
| 3 | 2 | 0 |
| 4 | 2 | 1 |
| 5 | 2 | 2 |
| 6 | 2 | 3 |
| 7 | 2 | 0, 1 |
| 8 | 2 | 2, 3 |
| 9 | 2 | 0-2 |
| 10 | 2 | 0-3 |
| 11 | 2 | 0, 2 |
| 12 to 15 | Reserved (Reserved) | Reserved (Reserved) |

In Table 6, the value (value) of the antenna port field is a decimal value corresponding to a bit state of the antenna port field. For example, when the value of the antenna port field is 0, the DMRS port (namely, the port number) indicated by the antenna port field is 0, and a CDM group without data is the CDM group 0. To be specific, a current terminal device (a terminal device that receives DCI including the antenna port field) performs transmission of a DMRS on a time-frequency resource corresponding to the CDM group 0 by using the port 0, and does not perform data transmission on the time-frequency resource corresponding to the CDM group 0. When the value of the antenna port field is 3, the DMRS port indicated by the antenna port field is 0, and CDM groups without data are the CDM group 0 and the CDM group 1. To be specific, the current terminal device performs transmission of the DMRS on the time-frequency resource corresponding to the CDM group 0 by using the port 0, a time-frequency resource corresponding to the CDM group 1 is reserved (that is, the current terminal device does not perform data transmission on the time-frequency resource), and both the CDM group 0 and the CDM group 1 may be used for scheduling of another terminal device. The current terminal device does not perform data transmission on time-frequency resources corresponding to the CDM group 0 and the CDM group 1.

For the type-1 DMRS, there are a maximum of two CDM groups. Therefore, the CDM group indication in Table 6 has only two candidate values: 1 and 2. For the single-symbol type-1 DMRS, a maximum of four DMRS ports can be multiplexed. Therefore, candidate values of DMRS ports indicated in Table 6 are 0 to 3.

When a quantity of data streams is 4 or less, there is only one codeword (codeword). When the quantity of data streams is greater than 4, there are two codewords. Therefore, Table 6 further includes information about a quantity of codewords.

It should be noted herein that, for the downlink DMRS, DMRS port numbers are 1000 to 1023, and for the uplink DMRS, DMRS port numbers are 0 to 23. However, in the antenna port indication table, DMRS port indexes are all 0 to 23. During downlink scheduling, the DMRS port index indicated by the DCI needs to be increased by 1000, to obtain an actual DMRS port number.

When the DMRS type is configured as type-1 (dmrs-Type=1 or dmrs-Type is not configured), and a symbol occupied by a longest DMRS is configured as two symbols (maxLength=2 or maxLength is configured as len2), an indication relationship of the antenna port field is shown in Table 7.

Table 7: Antenna port indication table (dmrs-Type=1 and maxLength=2)

| One codeword (one codeword): codeword 0 enabled (codeword 0 enable), and codeword 1 disabled (codeword 1 disable) | | | | Two codewords (one codeword): codeword 0 enabled (codeword 0 enable), and codeword 1 enabled (codeword 1 enable) | | | |
|---|---|---|---|---|---|---|---|
| Value (value) | Quantity of CDM groups without data (number of CDM group(s) without data) | DMRS port (DMRS port(s)) | Quantity of front-load symbols (Number of front-load symbols) | Value (value) | Quantity of CDM groups without data (number of CDM group(s) without data) | DMRS port (DMRS port(s)) | Quantity of front-load symbols (Number of front-load symbols) |
| 0 | 1 | 0 | 1 | 0 | 2 | 0-4 | 2 |
| 1 | 1 | 1 | 1 | 1 | 2 | 0, 1, 2, 3, 4, 6 | 2 |
| 2 | 1 | 0, 1 | 1 | 2 | 2 | 0, 1, 2, 3, 4, 5, 6 | 2 |
| 3 | 2 | 0 | 1 | 3 | 2 | 0, 1, 2, 3, 4, 5, 6, 7 | 2 |
| 4 | 2 | 1 | 1 | 4 to 31 | Reserved (Reserved) | Reserved (Reserved) | Reserved (Reserved) |
| 5 | 2 | 2 | 1 | | | | |
| 6 | 2 | 3 | 1 | | | | |
| 7 | 2 | 0, 1 | 1 | | | | |
| 8 | 2 | 2, 3 | 1 | | | | |
| 9 | 2 | 0-2 | 1 | | | | |
| 10 | 2 | 0-3 | 1 | | | | |
| 11 | 2 | 0, 2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0, 1 | 2 | | | | |
| 21 | 2 | 2, 3 | 2 | | | | |
| 22 | 2 | 4, 5 | 2 | | | | |
| 23 | 2 | 6, 7 | 2 | | | | |
| 24 | 2 | 0, 4 | 2 | | | | |

(continued)

| One codeword (one codeword): codeword 0 enabled (codeword 0 enable), and codeword 1 disabled (codeword 1 disable) | | | | Two codewords (one codeword): codeword 0 enabled (codeword 0 enable), and codeword 1 enabled (codeword 1 enable) | | | |
|---|---|---|---|---|---|---|---|
| Value (value) | Quantity of CDM groups without data (number of CDM group(s) without data) | DMRS port (DMRS port(s)) | Quantity of front-load symbols (Number of front-load symbols) | Value (value) | Quantity of CDM groups without data (number of CDM group(s) without data) | DMRS port (DMRS port(s)) | Quantity of front-load symbols (Number of front-load symbols) |
| 25 | 2 | 2, 6 | 2 | | | | |
| 26 | 2 | 0, 1, 4 | 2 | | | | |
| 27 | 2 | 2, 3, 6 | 2 | | | | |
| 28 | 2 | 0, 1, 4, 5 | 2 | | | | |
| 29 | 2 | 2, 3, 6, 7 | 2 | | | | |
| 30 | 2 | 0, 2, 4, 6 | 2 | | | | |
| 31 | Reserved (Reserved) | Reserved (Reserved) | Reserved (Reserved) | | | | |

The indication method shown in Table 7 is similar to the indication method shown in Table 6. The higher layer parameter is configured as maxLength=2, indicating that a quantity of DMRS symbols may be 1 or 2. Content indicated by values 0 to 11 of the antenna port field in Table 7 is completely the same as that indicated by values 0 to 11 of the antenna port field in Table 6. For the double-symbol type-1 DMRS, a maximum of eight DMRS ports can be multiplexed. Therefore, candidate values of DMRS port numbers indicated in Table 7 are 0 to 7. In addition, Table 7 further includes information about the quantity of codewords.

When the DMRS type is configured as type-2 (dmrs-Type=2 or dmrs-Type is configured as type2), and a symbol occupied by a longest DMRS is configured as one symbol (maxLength=1 or maxLength is not configured), an indication relationship of the antenna port field is shown in Table 8.

Table 8: Antenna port indication table (dmrs-Type=2 and maxLength=1)

| One codeword (one codeword): codeword 0 enabled (codeword 0 enable), and codeword 1 disabled (codeword 1 disable) | | | Two codewords (one codeword): codeword 0 enabled (codeword 0 enable), and codeword 1 enabled (codeword 1 enable) | | |
|---|---|---|---|---|---|
| Value (value) | Quantity of CDM groups without data (number of CDM group(s) without data) | DMRS port (DMRS port(s)) | Value (value) | Quantity of CDM groups without data (number of CDM group(s) without data) | DMRS port (DMRS port(s)) |
| 0 | 1 | 0 | 0 | 2 | 0-4 |
| 1 | 1 | 1 | 1 | 2 | 0-5 |
| 2 | 1 | 0, 1 | 2 to 31 | Reserved (Reserved) | Reserved (Reserved) |
| 3 | 2 | 0 | | | |
| 4 | 2 | 1 | | | |
| 5 | 2 | 2 | | | |
| 6 | 2 | 3 | | | |
| 7 | 2 | 0, 1 | | | |
| 8 | 2 | 2, 3 | | | |
| 9 | 2 | 0-2 | | | |
| 10 | 2 | 0-3 | | | |

(continued)

| One codeword (one codeword): codeword 0 enabled (codeword 0 enable), and codeword 1 disabled (codeword 1 disable) | | | Two codewords (one codeword): codeword 0 enabled (codeword 0 enable), and codeword 1 enabled (codeword 1 enable) | | |
|---|---|---|---|---|---|
| Value (value) | Quantity of CDM groups without data (number of CDM group(s) without data) | DMRS port (DMRS port(s)) | Value (value) | Quantity of CDM groups without data (number of CDM group(s) without data) | DMRS port (DMRS port(s)) |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0, 1 | | | |
| 18 | 3 | 2, 3 | | | |
| 19 | 3 | 4, 5 | | | |
| 20 | 3 | 0-2 | | | |
| 21 | 3 | 3-5 | | | |
| 22 | 3 | 0-3 | | | |
| 23 | 2 | 0, 2 | | | |
| 24 to 31 | Reserved (Reserved) | Reserved (Reserved) | | | |

The indication method shown in Table 8 is similar to the indication method shown in Table 6. The higher layer parameter is configured as maxLength=1 and dmrs-Type=1. For the single-symbol type-2 DMRS, a maximum of six DMRS ports can be multiplexed. Therefore, candidate values of DMRS ports indicated in Table 8 are 0 to 5. In addition, Table 8 further includes information about the quantity of codewords.

When the DMRS type is configured as type-2 (dmrs-Type=2 or dmrs-Type is configured as type2), and a symbol occupied by a longest DMRS is configured as two symbols (maxLength=2 or maxLength is configured as len2), an indication relationship of the antenna port field is shown in Table 9.

Table 9: Antenna port indication table (dmrs-Type=2 and maxLength=2)

| One codeword (one codeword): codeword 0 enabled (codeword 0 enable), and codeword 1 disabled (codeword 1 disable) | | | | Two codewords (one codeword): codeword 0 enabled (codeword 0 enable), and codeword 1 enabled (codeword 1 enable) | | | |
|---|---|---|---|---|---|---|---|
| Value (value) | Quantity of CDM groups without data (number of CDM group(s) without data) | DMRS port (DMRS port(s)) | Quantity of front-load symbols (Number of front-load symbols) | Value (value) | Quantity of CDM groups without data (number of CDM group(s) without data) | DMRS port (DMRS port(s)) | Quantity of front-load symbols (Number of front-load symbols) |
| 0 | 1 | 0 | 1 | 0 | 3 | 0-4 | 1 |
| 1 | 1 | 1 | 1 | 1 | 3 | 0-5 | 1 |
| 2 | 1 | 0, 1 | 1 | 2 | 2 | 0, 1, 2, 3, 6 | 2 |
| 3 | 2 | 0 | 1 | 3 | 2 | 0, 1, 2, 3, 6, 8 | 2 |
| 4 | 2 | 1 | 1 | 4 | 2 | 0, 1, 2, 3, 6, 7, 8 | 2 |

(continued)

| One codeword (one codeword): codeword 0 enabled (codeword 0 enable), and codeword 1 disabled (codeword 1 disable) | | | | Two codewords (one codeword): codeword 0 enabled (codeword 0 enable), and codeword 1 enabled (codeword 1 enable) | | | |
|---|---|---|---|---|---|---|---|
| Value (value) | Quantity of CDM groups without data (number of CDM group(s) without data) | DMRS port (DMRS port(s)) | Quantity of front-load symbols (Number of front-load symbols) | Value (value) | Quantity of CDM groups without data (number of CDM group(s) without data) | DMRS port (DMRS port(s)) | Quantity of front-load symbols (Number of front-load symbols) |
| 5 | 2 | 2 | 1 | 5 | 2 | 0, 1, 2, 3, 6, 7, 8, 9 | 2 |
| 6 | 2 | 3 | 1 | 6 to 63 | Reserved (Reserved) | Reserved (Reserved) | Reserved (Reserved) |
| 7 | 2 | 0, 1 | 1 | | | | |
| 8 | 2 | 2, 3 | 1 | | | | |
| 9 | 2 | 0-2 | 1 | | | | |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0, 1 | 1 | | | | |
| 18 | 3 | 2, 3 | 1 | | | | |
| 19 | 3 | 4, 5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0, 2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0, 1 | 2 | | | | |

(continued)

| One codeword (one codeword): codeword 0 enabled (codeword 0 enable), and codeword 1 disabled (codeword 1 disable) | | | | Two codewords (one codeword): codeword 0 enabled (codeword 0 enable), and codeword 1 enabled (codeword 1 enable) | | | |
|---|---|---|---|---|---|---|---|
| Value (value) | Quantity of CDM groups without data (number of CDM group(s) without data) | DMRS port (DMRS port(s)) | Quantity of front-load symbols (Number of front-load symbols) | Value (value) | Quantity of CDM groups without data (number of CDM group(s) without data) | DMRS port (DMRS port(s)) | Quantity of front-load symbols (Number of front-load symbols) |
| 37 | 3 | 2, 3 | 2 | | | | |
| 38 | 3 | 4, 5 | 2 | | | | |
| 39 | 3 | 6, 7 | 2 | | | | |
| 40 | 3 | 8, 9 | 2 | | | | |
| 41 | 3 | 10, 11 | 2 | | | | |
| 42 | 3 | 0, 1, 6 | 2 | | | | |
| 43 | 3 | 2, 3, 8 | 2 | | | | |
| 44 | 3 | 4, 5, 10 | 2 | | | | |
| 45 | 3 | 0, 1, 6, 7 | 2 | | | | |
| 46 | 3 | 2, 3, 8, 9 | 2 | | | | |
| 47 | 3 | 4, 5, 10, 11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0, 1 | 2 | | | | |
| 53 | 1 | 6, 7 | 2 | | | | |
| 54 | 2 | 0, 1 | 2 | | | | |
| 55 | 2 | 2, 3 | 2 | | | | |
| 56 | 2 | 6, 7 | 2 | | | | |
| 57 | 2 | 8, 9 | 2 | | | | |
| 58-63 | Reserved (Reserved) | Reserved (Reserved) | Reserved (Reserved) | | | | |

For the double-symbol type-2 DMRS, a maximum of 12 DMRS ports can be multiplexed. Therefore, candidate values of DMRS ports indicated in Table 9 are 0 to 11. In addition, Table 9 further includes information about the quantity of codewords.

It should be understood that DMRS port multiplexing and indication shown in Table 2 to Table 9 are applicable to a case in which the length of the FD-OCC is 2.

One objective of DMRS enhancement proposed in a MIMO topic of 3rd Generation Partnership Project Release-18 (3GPP Rel-18) is: A quantity of orthogonal DMRS ports is increased to 24 without increasing DMRS overheads. For each DMRS type, both a maximum quantity of orthogonal ports for the single-symbol DMRS and a maximum quantity of orthogonal ports for the double-symbol DMRS are doubled.

To increase the quantity of orthogonal DMRS ports, an implementation is to increase the length of the FD-OCC. For example, the length of the FD-OCC is extended from 2 (that is, an FD-OCC-2) to 4 (that is, an FD-OCC-4). For example, in the foregoing Release-15, Release-16, and Release-17 described above, FD-OCC-2s that are mutually orthogonal are set to two FD-OCC-2s: {+1, +1} and {+1, -1}. In Release-18, orthogonal FD-OCC-4s that are mutually orthogonal may be flexibly set, for example, may be set to four FD-OCC-4s: {+1, +1, +1, +1}, {+1, -1, +1, -1}, {+1, +1, -1, -1}, {+1, -1, -1, +1}, or may be set to: {+1, +1, +1, +1}, {+1, -1, +1, -1}, {+1, +j, -1, -j}, {+1, -j, -1, +j}.

In this case, a quantity of orthogonal DMRS ports that can be multiplexed in each CDM group is extended from 2 to 4. In this case, maximum quantities of orthogonal DMRS ports supported by the type-1 DMRS and the type-2 DMRS are shown in Table 10.

Table 10: Maximum quantities of orthogonal DMRS ports supported by an FD-OCC-4

|  | Type-1 DMRS | Type-2 DMRS |
|---|---|---|
| Single-symbol | 8 | 12 |
| Double-symbol | 16 | 24 |

Correspondingly, based on the increased DMRS ports and the specified FD-OCC-4, a base station also sets corresponding DMRS port mapping parameter tables for different types of DMRSs, and antenna port indication tables for DMRS port indication, to implement joint scheduling of DMRS ports based on the FD-OCC-4 in a same CMD group. The scheduling manner based on the FD-OCC-4 is similar to the scheduling manner based on the FD-OCC-2. Details are not described herein.

When terminal devices of different versions have DMRS port scheduling requirements, for example, when the base station schedules both a DMRS port in R18 and a DMRS port in R15, how to schedule DMRS ports that use orthogonal codes with different lengths becomes a problem that needs to be urgently resolved.

In view of this, this application provides a signal transmission method, to resolve a problem of joint scheduling of DMRS ports that use orthogonal codes with different lengths.

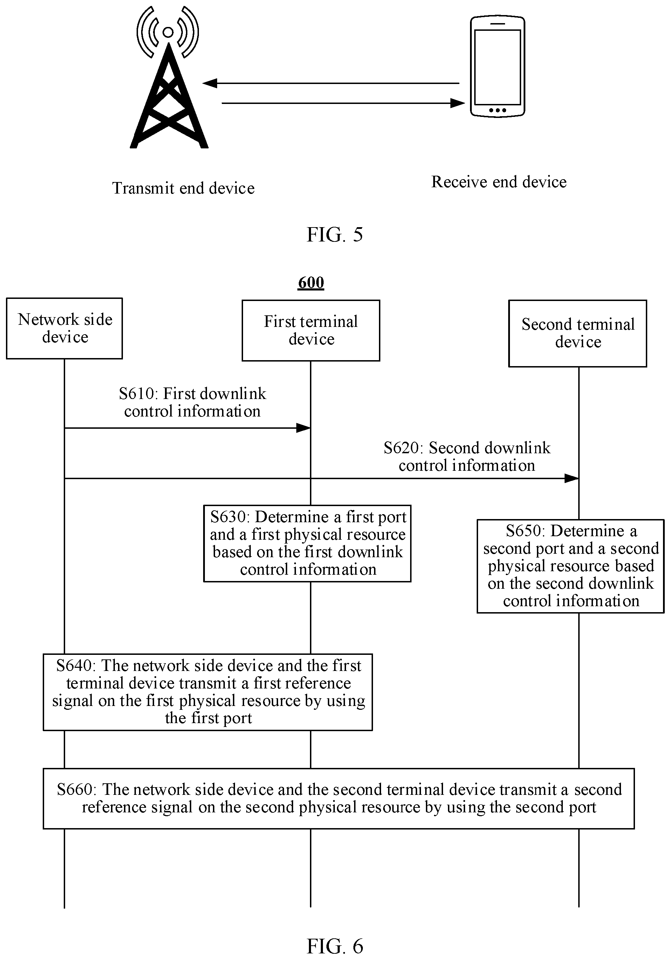

For example, FIG. 5 is a diagram of a communication system applicable to an embodiment of this application. As shown in FIG. 5, the communication system includes a receive end device and a transmit end device. The receive end device may indicate, to the transmit end device by using the signal transmission method provided in this application, a code length of a mask corresponding to a reference signal. In the example shown in FIG. 5, the transmit end device is a network side device, and the receive end device is a terminal device.

It may be understood that the receive end and the transmit end do not limit receiving and sending of the reference signal. For example, for a downlink reference signal, the receive end device is a terminal device, and the transmit end device is a network side device. For another example, for an uplink reference signal, the receive end device is a network side device, and the transmit end device is a terminal device.

It may be understood that, in another application scenario of this application, the transmit end device may alternatively be a terminal device, and the receive end device may be a network side device. Alternatively, both the receive end device and the transmit end device are different network side devices. Alternatively, both the receive end device and the transmit end device are different terminal devices, or the like. This is not limited herein in this embodiment of this application.

It should be understood that the communication system shown in FIG. 5 may further include more network nodes, for example, a terminal device, a network side device, or a transmission and reception point (Transmission and Reception Point, TRP). The network side device or the terminal device included in the communication system shown in FIG. 5 may be the network side device or the terminal device in the foregoing various forms. Details are not described one by one in the figure in embodiments of this application.

It should be further understood that, in this embodiment of this application, the "reference signal" may include an uplink reference signal and a downlink reference signal.

For example, the uplink reference signal may include a sounding reference signal (sounding reference signal, SRS), a DMRS of uplink information, a phase tracking signal (Phase tracking Reference Signal, PTRS), or a positioning reference signal. The "uplink information" may be a physical uplink shared channel (physical uplink shared channel, PUSCH), data carried on the PUSCH, a physical uplink control channel (physical uplink control channel, PUCCH), or data carried on the PUCCH. This is not specifically limited in this application. For example, the uplink reference signal may be a DMRS of the PUSCH, a DMRS of the PUCCH, or a PTRS of the PUSCH.

For example, the downlink reference signal may include a channel state information reference signal (channel state information reference signal, CSI-RS) or a DMRS of downlink information. The "downlink information" may be a physical downlink shared channel (physical downlink shared channel, PDSCH), data carried on the PDSCH, a physical downlink control channel (physical downlink control channel, PDCCH), data carried on the PDCCH, or a physical broadcast channel (physical broadcast channel, PBCH). This is not specifically limited in this application. For example, the downlink reference signal may be a DMRS of the PDSCH, a DMRS of the PDCCH, a DMRS of the PBCH, or a PTRS of the PDSCH.

In this embodiment of this application, an orthogonal code may be a time domain orthogonal code (for example, a TD-OCC), or a frequency domain orthogonal code (for example, an FD-OCC), or an orthogonal code (for example, an OCC) obtained by calculating the time domain orthogonal code and the frequency domain orthogonal code, or a superposition of the time domain orthogonal code and the frequency domain orthogonal code.

In this embodiment of this application, the orthogonal code may be a cyclic shift (Cyclic Shift, CS) code or a Walsh code.

In this embodiment of this application, a code length of the orthogonal code may be a shortest code length that can ensure orthogonality between codes, or the code length of the orthogonal code is a minimum quantity of physical resources to which the orthogonal code is mapped, or the code length of the orthogonal code is a quantity of codes included in a group of orthogonal codes. For example, if the code length of the orthogonal code is 2, shortest code lengths of two orthogonal codes are respectively 2. The two orthogonal codes are respectively {+1, +1} and {+1, -1}. For another example, if a code length of the FD-OCC is 2, the FD-OCC is mapped to at least two subcarriers. For another example, if the code length of the orthogonal code is 2, a group of orthogonal codes includes two orthogonal codes.

It should be noted that in this embodiment of this application, a code includes a plurality of code values. For example, a code with a code length of 2 includes two code values. Specifically, for example, the code is {+1, +1}, and the code includes two code values: +1 and +1. The code may be understood as a sequence. For example, the code with the code length of 2 is a sequence with a length of 2. The code value is an element of the sequence, and orthogonal codes are mutually orthogonal, which means that two sequences are mutually orthogonal.

With reference to FIG. 6, the following describes in detail the signal transmission method provided in this application. FIG. 6 is a schematic interaction diagram of a signal transmission method 600 according to an embodiment of this application. The method 600 may be applied to the scenario shown in FIG. 5, and certainly may also be applied to another communication scenario. This is not limited herein in this embodiment of this application.

It should be further understood that in the following example, the method is described by using an example in which the method is performed by a terminal device and a network side device. By way of example but not limitation, the method may alternatively be performed by chips, chip systems, processors, or the like used in the terminal device and the network side device.

As shown in FIG. 6, the method 600 shown in FIG. 6 may include S610 to S660. The following describes the steps in the method 600 in detail with reference to FIG. 6.

S610: The network side device sends first downlink control information to a first terminal device.

S620: The network side device sends second downlink control information to a second terminal device.

In this embodiment of this application, when determining that both the first terminal device and the second terminal device have a scheduling requirement for reference information, the network side device may first determine, based on protocol releases of the first terminal device and the second terminal device, code lengths of orthogonal codes that can be used by the first terminal device and the second terminal device.

The first terminal device and the second terminal device may be terminal devices of a same protocol release, or may be terminal devices of different protocol releases. For example, the first terminal device is of a first protocol release, the second terminal device is of a second protocol release, and a release time of the first protocol release is later than a release time of the second protocol release. For another example, the first terminal device is of a first protocol release, the second terminal device is of a second protocol release, and the first protocol release is higher than the second protocol release. Specifically, for example, the first protocol release is a protocol release 18 (R18), and the second protocol release is one or more of a protocol release 15 (R15), a protocol release 16 (R16), a protocol release 17 (R17), or the like. The first terminal device and the second terminal device may be terminal devices of a same type, or may be terminal devices of different types. For example, a type of the first terminal device is an eMBB terminal, and a type of the second terminal device is a RedCap terminal. For another example, for example, the first terminal device is a terminal device having a capability of supporting a long orthogonal code, and a type of the second terminal device is a terminal device having a capability of supporting a short orthogonal code.

The first terminal device and the second terminal device may support orthogonal codes with a same code length, or may separately support orthogonal codes with different code lengths. A same terminal device may support orthogonal codes with different code lengths. For example, the first terminal device supports an FD-OCC with a code length of 4, and also supports an FD-OCC with a code length of 2. For another example, the second terminal device supports an FD-OCC with a code length of 2, but does not support an FD-OCC with a code length of 4.

In this embodiment of this application, the first terminal device supports an orthogonal code with a code length of $n \times m$, the second terminal device supports an orthogonal code with a code length of m, and both n and m are positive integers greater than or equal to 2. The code length of the orthogonal code supported by the first terminal device is n times the code length of the orthogonal code supported by the second terminal device. For an orthogonal code with a length of m, there is a group of candidate codes, the group of candidate codes includes m orthogonal codes, and the m orthogonal codes are mutually orthogonal. In this case, in this embodiment of this application, the first terminal device and the second terminal device may perform resource scheduling on a same physical resource based on orthogonal codes that are mutually orthogonal.

For example, the network side device may indicate the first terminal device by using the first downlink control information, and the first terminal device may receive or send a first reference signal on a first physical resource by using a first port. In a possible implementation, a network side allocates a port or schedules a physical resource based on the protocol release of the first terminal device.

The first port uses a first orthogonal code, and the first orthogonal code includes n×m code values. In other words, the first orthogonal code is a sequence including the n×m code values. Every m code values form one sub-orthogonal code. The first orthogonal code includes n sub-orthogonal codes.

It should be noted that, the first port using a first orthogonal code means that a second reference signal sent by using the first port is generated based on the first orthogonal code.

In addition, the network side device may indicate the second terminal device by using the second downlink control information, and the second terminal device may receive or send the second reference signal on a second physical resource by using a second port. In a possible implementation, the network side allocates a port or schedules a physical resource based on the protocol release of the second terminal device.

The second port uses a second orthogonal code, and the first orthogonal code includes m code values. In other words, the second orthogonal code is a sequence including the m code values.

It should be noted that, the second port using a second orthogonal code means that the second reference signal sent by using the second port is generated based on the first orthogonal code.

In this embodiment of this application, because the code length of the first orthogonal code is n times the code length of the second orthogonal code, the first orthogonal code may be considered as an orthogonal code with a code length of m and including n sub-orthogonal codes with a code length of m. The first orthogonal code and the second orthogonal code need to satisfy the following condition: The n sub-orthogonal codes in the first orthogonal code are separately orthogonal to the second orthogonal code.

For example, m=2, and n=2, in other words, the code length of the second orthogonal code is 2, and the code length of the first orthogonal code is 4. Specifically, for example, when the second orthogonal code is {+1, +1}, the sub-orthogonal code forming the first orthogonal code may be any one of {+1, -1} and {-1, +1} that are orthogonal to {+1, +1}. For example, the first orthogonal code may be {+1, -1, -1, +1} formed by {+1, -1} and {-1, +1}, or may be {+1, -1, +1, -1} formed by two {+1, -1}, or may be {-1, +1, -1, +1} formed by {-1, +1}.

Alternatively, when the second orthogonal code is {+1, -1}, the sub-orthogonal code forming the first orthogonal code may be any one of {+1, +1} and {-1, -1} that are orthogonal to {+1, - 1}. For example, the first orthogonal code may be {+1, +1, -1, -1} formed by {+1, +1} and {-1, -1}, or may be {+1, +1, +1, +1} formed by two {+1, +1}, or may be {-1, -1, -1, -1} formed by {-1, -1}.

It should be noted that the n groups of sub-orthogonal codes form one orthogonal code in a specific sequence. Different sequences of sub-orthogonal codes lead to different orthogonal codes.

In this embodiment of this application, the n sub-orthogonal codes in the first orthogonal code may be same codes. For example, the first orthogonal code {+1, -1, +1, -1} includes two same sub-orthogonal codes {+1, -1}. The n sub-orthogonal codes in the first orthogonal code may be different codes. For example, the first orthogonal code {+1, -1, -1, +1} includes a sub-orthogonal code {+1, -1} and a sub-orthogonal code {-1, +1}.

In some embodiments, mutually orthogonal candidate codes are specified in a corresponding protocol release. The second terminal device may be capable of identifying only specified candidate codes. In this case, the sub-orthogonal code needs to be one or more of second candidate codes corresponding to the second orthogonal code.

For example, according to a stipulation in a corresponding protocol release, n×m mutually orthogonal first candidate codes and m mutually orthogonal second candidate codes are included. A code length of the first candidate code is n×m, and a code length of the second candidate code is m.

The second orthogonal code is one of the m second candidate codes, the first orthogonal code is one of the n×m mutually orthogonal first candidate codes, and the first orthogonal code satisfies the following condition: Each sub-orthogonal code in the first orthogonal code is a second candidate code in the remaining (m-1) second candidate codes.

For example, if m=2, n=2, the code length of the first candidate code is 4, and the code length of the second candidate code is 2, there are four mutually orthogonal first candidate codes and two mutually orthogonal second candidate codes. For example, the four first candidate codes are {+1, +1, +1, +1}, {+1, -1, +1, -1}, {+1, +1, -1, -1}, and {+1, -1, -1, +1}. The two second candidate codes are {+1, +1} and {+1, -1}.

When the second orthogonal code used by the second port is {+1, +1}, because the remaining second candidate code is {+1, -1}, the sub-orthogonal code needs to be {+1, -1}. The first candidate code {+1, -1, +1, -1} formed by the sub-orthogonal code {+1, -1} in the four first candidate codes is the first orthogonal code. None of the remaining three first candidate codes {+1, +1, +1, +1}, {+1, +1, -1, -1}, and {+1, -1, -1, +1} can be used as the first orthogonal code.

Similarly, when the second orthogonal code used by the second port is {+1, -1}, because the remaining second candidate code is {+1, +1}, the sub-orthogonal code needs to be {+1, +1}. The first candidate code {+1, +1, +1, +1} formed by the sub-orthogonal code {+1, +1} in the four first candidate codes is used as the first orthogonal code. None of the remaining three first candidate codes {+1, -1, +1, -1}, {+1, +1, -1, -1}, and {+1, -1, -1, +1} can be used as the first orthogonal code.

Alternatively, an example in which m=4 and n=2 is used. In other words, the code length of the second orthogonal code is 4, and the code length of the first orthogonal code is 8. According to the protocol stipulation, four mutually orthogonal second candidate codes are preset: {+1, +1, +1, +1}, {+1, -1, +1, -1}, {+1, +1, -1, -1}, and {+1, -1, -1, +1}; and eight mutually orthogonal first candidate codes are preset, which are assumed to be {+1, +1, +1, +1, +1, +1, +1, +1}, {+1, -1, +1, -1, +1, -1, +1, -1}, {+1, +1, -1, -1, +1, +1, -1, -1}, {+1, -1, -1, +1, +1, -1, -1, +1}, ..., and so on.

Assuming that the second orthogonal code used by the second port is {+1, +1, +1, +1}, two sub-orthogonal codes forming the first orthogonal code should be separately one of the remaining three second candidate codes {+1, -1, +1, -1}, {+1, +1, -1, -1}, and {+1, -1, -1, +1}.

For example, the first orthogonal code may be {+1, -1, +1, -1, +1, -1, +1, -1} formed by two same sub-orthogonal codes {+1, -1, +1, -1}, or {+1, -1, +1, -1, +1, -1, -1, +1} formed by different sub-orthogonal codes {+1, -1, +1, -1} and {+1, -1, -1, +1}.

In this embodiment of this application, the orthogonal code may be a frequency division orthogonal code, for example, an FD-OCC. In other words, the first orthogonal code is a first frequency division orthogonal code, and the second orthogonal code is a second frequency division orthogonal code.

Optionally, the orthogonal code may be a time division orthogonal code, for example, a TD-OCC. In other words, the first orthogonal code is a first time division orthogonal code, and the second orthogonal code is a second time division orthogonal code.

Optionally, the orthogonal code may alternatively be a code including a frequency division orthogonal code and a time division orthogonal code, for example, an OCC. In other words, the first orthogonal code includes a first frequency division orthogonal code and a first time division orthogonal code, and the second orthogonal code includes a second frequency division orthogonal code and a second time division orthogonal code.

The first orthogonal code including a first frequency division orthogonal code and a first time division orthogonal code means that code values in the first orthogonal code are obtained through calculation based on a code value of the first frequency division orthogonal code and a code value of the first time division orthogonal code. Alternatively, the first orthogonal code is a superposition of the first frequency division orthogonal code and the first time division orthogonal code. For example, the first orthogonal code is an OCC, and includes a first FD-OCC and a first TD-OCC. If the first FD-OCC is {+1, +1}, and the first TD-OCC is {+1, -1}, it can be learned from the content recorded in the related embodiment of Formula (1) that the first orthogonal code is {+1, +1, -1, -1}. A resource mapping manner of {+1, +1, -1, -1} is first frequency domain resource mapping and then time domain resource mapping.

Optionally, the first orthogonal code includes a first frequency division orthogonal code and a first time division orthogonal code, the second orthogonal code includes a second frequency division orthogonal code and a second time division orthogonal code, and the first time division orthogonal code is the same as the second time division orthogonal code. For example, both the first time division orthogonal code and the second time division orthogonal code are {+1, -1}. Alternatively, the first frequency division orthogonal code is the same as the second frequency division orthogonal code. For example, both the first frequency division orthogonal code and the second frequency division orthogonal code are {+1, +1}. It should be noted herein that, for the first time division orthogonal code being the same as the second time division orthogonal code, or the first frequency division orthogonal code being the same as the second frequency division orthogonal code, it needs to be ensured that one of the following conditions is satisfied: Each sub-orthogonal code in the first orthogonal code is orthogonal to the second orthogonal code, and each sub-orthogonal code in the first orthogonal code is a second candidate code in the remaining (m-1) second candidate codes.

It may also be understood as that the first orthogonal code can be orthogonal to a code including n second orthogonal codes. For example, the first orthogonal code is {+1, -1, +1, -1}, the second orthogonal code is {+1, +1}, a code including two second orthogonal codes is {+1, +1, +1, +1}, and the first orthogonal code +1, -1, {+1, -1} is orthogonal to {+1, +1, +1, +1}.

In some possible implementations, when the network side device detects that the first terminal device and the second terminal device need to schedule ports that use orthogonal codes with different code lengths, the network side device may perform the foregoing scheduling method by default, to be specific, the configured first orthogonal code used by the first port and the configured second orthogonal code used by the second port satisfy the foregoing condition: The n sub-orthogonal codes in the first orthogonal code are separately orthogonal to the second orthogonal code.

In some possible implementations, when the network side device detects that the first terminal device and the second terminal device need to schedule ports that use orthogonal codes with different code lengths, the network side device may alternatively determine a scheduling manner based on capability information independently reported by the terminal device.

The capability information may indicate one or more of the following capabilities: whether the terminal device supports multi-user scheduling, a maximum quantity of multiplexing users supported by the terminal device, a maximum quantity of multiplexing data streams supported by the terminal device, whether the terminal device supports multi-user scheduling with another type of terminal device, and the like.

Whether the terminal device supports multi-user scheduling may be whether the terminal device supports multi-user scheduling in a same CDM group, or whether the terminal device supports multi-user scheduling in different CDM groups. The maximum quantity of multiplexing users supported by the terminal device is a maximum quantity of multiplexing users supported by the terminal device in a same CDM group, or a maximum quantity of multiplexing users supported by the terminal device in different CDM groups. The maximum quantity of multiplexing data streams supported by the terminal device is a quantity of DMRS ports multiplexed by the terminal device when the terminal device supports multi-user scheduling. The DMRS multiplexed by the terminal device may be multiplexed in a time division multiplexing manner, a frequency division multiplexing manner, or a code division multiplexing manner. Whether the terminal device supports multi-user scheduling with another type of terminal device means whether multiplexing can be performed between users supporting different quantities of DMRS ports or different code lengths of orthogonal codes used by DMRS ports. The multi-user scheduling may be performed in a same CDM group or in different CDM groups, for example, whether new UE supports multiplexing with old UE, or whether enhanced UE supports multiplexing with UE before enhancement; and for example, whether UE in the protocol release 18 supports multiplexing with UE in another protocol release.

For example, before performing S610 and S620, the network side device receives first capability information sent by the first terminal device, or receives second capability information sent by the second terminal device.

The first capability information indicates whether the first terminal device supports scheduling of the first port and the second port on a same physical resource, in other words, whether the first terminal device supports multiplexing, on a same physical resource (that is, in a same CDM group), with another terminal device that uses an orthogonal code with a different code length.

The second capability information indicates whether the second terminal device supports scheduling of the first port and the second port on a same physical resource, in other words, whether the second terminal device supports multiplexing, on a same physical resource (that is, in a same CDM group), with another terminal device that uses an orthogonal code with a different code length.

When either of the first terminal device or the second terminal device does not support scheduling of the first port and the second port on a same physical resource, it indicates that if the network side device schedules the first port and the second port on the same physical resource in a conventional scheduling manner, the first terminal device or the second terminal device cannot perform signal demodulation or channel estimation successfully. **In** this case, the network side device may choose to perform the scheduling method provided in this embodiment of this application to perform scheduling, to be specific, the configured first orthogonal code used by the first port and the configured second orthogonal code used by the second port satisfy the foregoing condition: The n sub-orthogonal codes in the first orthogonal code are separately orthogonal to the second orthogonal code.

In a possible implementation, the first port and the second port may be scheduled on a same physical resource, in other words, the first physical resource and the second physical resource are same physical resources. For example, the first physical resource and the second physical resource are same CDM groups. In this case, the second terminal device does not expect that any one of the n sub-orthogonal codes is not orthogonal to the second orthogonal code. Alternatively, the first terminal device does not expect that any one of the n sub-orthogonal codes is not orthogonal to the second orthogonal code. Alternatively, neither the second terminal device nor the second terminal device expects that any one of the n sub-orthogonal codes is not orthogonal to the second orthogonal code.

In a possible implementation, the first port and the second port may be scheduled on different physical resources, in other words, the first physical resource and the second physical resource are different physical resources. For example, the first physical resource and the second physical resource are different CDM groups.

Based on the scheduling method provided in this application, because the n sub-orthogonal codes in the first orthogonal code are separately orthogonal to the second orthogonal code, even if the first physical resource is the same as the second physical resource (that is, multiplexing is performed in a same CDM group), the first orthogonal code can be orthogonal to the n second orthogonal codes, to ensure that both the first terminal device and the second terminal device can successfully perform reference signal demodulation or channel estimation. In this way, joint scheduling between ports that use orthogonal codes with different code lengths is implemented.

After determining the first port and the second port, the network side device searches for corresponding indication information based on a preset table, for example, the port parameter mapping table shown in Table 4 and Table 5 and the antenna port mapping table shown in Table 6 to Table 9 that are described in the foregoing embodiment, and includes the indication information in downlink control information (Downlink Control Information), and sends the downlink control information to the terminal device.

S630: The first terminal device determines the first port and the first physical resource based on the first downlink control information.

After receiving the first downlink control information, the first terminal device may determine the first port and the first physical resource based on indication information carried in the first downlink control information. Correspondingly, the first terminal device may alternatively determine, based on the indication information carried in the first downlink control information and the table specified in the protocol, for example, the port parameter mapping table shown in Table 4 and Table 5 and the antenna port mapping table shown in Table 6 to Table 9 that are described in the foregoing embodiment, the first port, and obtain the first orthogonal code corresponding to the first port.

Alternatively, the first physical resource may be determined based on resource allocation indication information in the first downlink control information. The first physical resource may be a frequency domain resource and/or a time domain resource. The physical resource is a frequency resource. For example, the physical resource is one or more subcarriers, or one or more resource blocks. The physical resource is a time resource. For example, the physical resource is one or more OFDM symbols, or one or more slots, or one or more subframes, or one or more frames, or one or more mini-slots. The physical resource is a time resource and a frequency resource, in other words, the physical resource is a time-frequency resource. For example, the physical resource is one or more resource elements, or one CDM group, or a plurality of CDM groups.

For example, the first downlink control information may be DCI. In this case, the first terminal device may determine, based on a frequency domain resource assignment (frequency domain resource assignment, FDRA) field carried in the DCI, a frequency domain resource corresponding to the first port, and determine, based on a time domain resource assignment (time domain resource assignment, TDRA) field carried in the DCI, a time domain resource corresponding to the first port.

S640: The first terminal device transmits the first reference signal on the first physical resource by using the first port.

After the first terminal device determines the first port, the first orthogonal code corresponding to the first port, and the first physical resource, a first network side device and the first terminal device may transmit the first reference signal on the first physical resource by using the first orthogonal code and the first port.

For example, if the first reference signal is an uplink reference signal, after determining the first port, the first orthogonal code corresponding to the first port, and the first physical resource, the first terminal device may generate the uplink reference signal by using the first orthogonal code, and then send the uplink reference signal to the network side device on the first physical resource by using the first port. The network side device receives the uplink reference signal on the first physical resource by using the first port, and demodulates the uplink reference signal by using the first orthogonal code.

If the first reference signal is a downlink reference signal, after delivering first control information to the first terminal device, the network side device may generate an uplink reference signal by using the first orthogonal code, and then send the uplink reference signal to the first terminal device on the first physical resource by using the first port. Correspondingly, after determining the first port, the first orthogonal code corresponding to the first port, and the first physical resource based on the first downlink control information, the first terminal device receives the downlink reference signal on the first physical resource by using the first port, and demodulates the uplink reference signal by using the first orthogonal code.

S650: The second terminal device determines the second port and the second physical resource based on the second downlink control information.

After receiving the second downlink control information, the second terminal device may determine the second port and the second physical resource based on indication information carried in the second downlink control information. Correspondingly, the second terminal device may alternatively determine, based on the indication information carried in the second downlink control information and the table specified in the protocol, for example, the port parameter mapping table shown in Table 4 and Table 5 and the antenna port mapping table shown in Table 6 to Table 9 that are described in the foregoing embodiment, the second port, and obtain the second orthogonal code corresponding to the second port.

Alternatively, the second physical resource may be determined based on resource allocation indication information in the second downlink control information. The second physical resource may be a frequency domain resource and/or a time domain resource. The physical resource is a frequency resource. For example, the physical resource is one or more subcarriers, or one or more resource blocks. The physical resource is a time resource. For example, the physical resource is one or more OFDM symbols, or one or more slots, or one or more subframes, or one or more frames, or one or more mini-slots. The physical resource is a time resource and a frequency resource, in other words, the physical resource is a time-frequency resource. For example, the physical resource is one or more resource elements, or one CDM group, or a plurality of CDM groups.

For example, the second downlink control information may be DCI. In this case, the second terminal device may determine, based on FDRA carried in the DCI, a frequency domain resource corresponding to the second port, and determine, based on TDRA carried in the DCI, a time domain resource corresponding to the second port.

S660: The second terminal device transmits the second reference signal on the second physical resource by using the second port.

After the second terminal device determines the second port, the second orthogonal code corresponding to the second port, and the second physical resource, a second network side device and the second terminal device may transmit the second reference signal on the second physical resource by using the second orthogonal code and the second port.

For example, if the second reference signal is an uplink reference signal, after determining the second port, the second orthogonal code corresponding to the second port, and the second physical resource, the second terminal device may generate the uplink reference signal by using the second orthogonal code, and then send the uplink reference signal to the network side device on the second physical resource by using the second port. The network side device receives the uplink reference signal on the second physical resource by using the second port, and demodulates the uplink reference signal by using the second orthogonal code.

If the second reference signal is a downlink reference signal, after delivering second control information to the second terminal device, the network side device may generate an uplink reference signal by using the second orthogonal code, and then send the uplink reference signal to the second terminal device on the second physical resource by using the second port. Correspondingly, after determining the second port, the second orthogonal code corresponding to the second port, and the second physical resource based on the second downlink control information, the second terminal device receives the downlink reference signal on the second physical resource by using the second port, and demodulates the uplink reference signal by using the second orthogonal code.

According to the signal transmission method provided in this application, because the n sub-orthogonal codes in the first orthogonal code used by the first port are separately orthogonal to the second orthogonal code used by the second port, joint scheduling between ports that use orthogonal codes with different code lengths is implemented. In addition, even if the first port and the second port are multiplexed on a same physical resource, because the first orthogonal code can be orthogonal to a code including the n second orthogonal codes used on a corresponding physical resource, both the first terminal device and the second terminal device can successfully perform reference signal demodulation or channel estimation. In this way, demodulation performance of the first terminal device and the second terminal device is ensured.

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing method embodiments may be unnecessary, or some steps may be added. Alternatively, any two or more of the foregoing embodiments are combined. A modified, changed, or combined solution also falls within the scope of embodiments of this application.

It should be further understood that each table in the foregoing examples may alternatively include only one or more rows in the corresponding table. To be specific, in embodiments of this application, each antenna port indication table, a table of a mapping relationship between a bit state of each field (for example, a first field, a fourth field, or a fifth field) and a code length of a mask, a table of a mapping relationship among a bit state of each field, a code length of a mask, and an offset value of a port number, or a table of a mapping relationship among a bit state of each field, a code length of a mask, and a value set to which a port number of a DMRS belongs may alternatively include a part of rows (for example, one or more rows) instead of all rows in the corresponding table.

It should be further understood that division of manners, cases, categories, and embodiments in embodiments of this application is merely intended for ease of description, and should not constitute a particular limitation. The features in the manners, categories, cases, and embodiments may be combined without contradiction.

It should be further understood that various numbers in embodiments of this application are merely used for differentiation for ease of description, and are not used to limit the scope of embodiments of this application. The sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of embodiments of this application emphasize differences between the embodiments. For same or similar parts that are not mentioned, refer to the embodiments. For brevity, details are not described herein again.

It should be further understood that, in embodiments of this application, "predefine" or "preset" may be implemented by pre-storing corresponding code or a corresponding table in a device, or in another manner for indicating related information. A specific implementation thereof is not limited in this application.

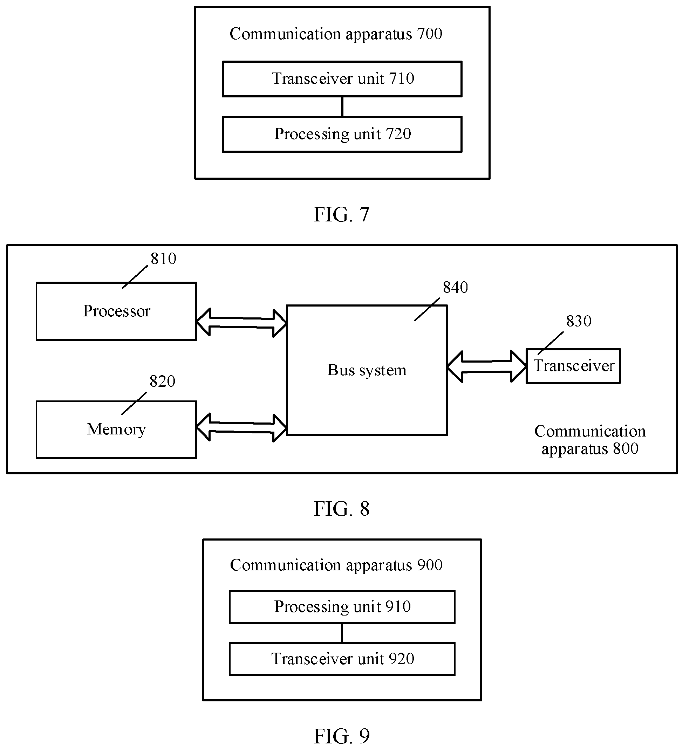

The foregoing describes in detail the signal transmission method in embodiments of this application with reference to FIG. 1 to FIG. 6. The following describes in detail communication apparatuses in embodiments of this application with reference to FIG. 7 to FIG. 12.

In this embodiment, a terminal device and a network side device may be divided into functional modules based on the foregoing method. For example, each functional module may be obtained through division based on each corresponding function, or two or more functions may be integrated into one processing module. The integrated module may be implemented in a form of hardware. It should be noted that module division in embodiments is an example and is merely logical function division. During actual implementation, another division manner may be used.

It should be noted that related content of the steps in the foregoing method embodiments may be referenced to function descriptions of corresponding functional modules, and details are not described herein again.

The terminal device and the network side device provided in embodiments of this application are configured to perform any signal transmission method provided in the foregoing method embodiments. Therefore, effects that are the same as those of the foregoing implementation method can be achieved. When an integrated unit is used, the terminal device or the network side device may include a processing module, a storage module, and a communication module. The processing module may be configured to control and manage an action of the terminal device or the network side device. For example, the processing unit may be configured to support the terminal device or the network side device in performing a step performed by the processing unit. The storage module may be configured to support storage of program code, data, and the like. The communication module may be configured to support the terminal device or the network side device in communicating with another device.

The processing module may be a processor or a controller. The processing module may implement or execute various example logical blocks, modules, and circuits described with reference to content disclosed in this application. Alternatively, the processor may be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, such as a radio frequency circuit, a Bluetooth chip, or a Wi-Fi chip.

For example, FIG. 7 is a block diagram of a communication apparatus 700 according to an embodiment of this application. The communication apparatus 700 may correspond to the terminal device (for example, the first terminal device or the second terminal device) described in the foregoing signal transmission methods, or may be a chip or a component used in the terminal device. In addition, each module or unit in the communication apparatus 700 is configured to perform each action or processing process performed by the terminal device in any one of the foregoing signal transmission methods.

As shown in FIG. 7, the communication apparatus 700 includes a transceiver unit 710 and a processing unit 720. The transceiver unit 710 is configured to perform specific signal receiving and sending under driving of the processing unit 720.

Further, the communication apparatus 700 may include a storage unit, and the transceiver unit 710 may be a transceiver, an input/output interface, or an interface circuit. The storage unit is configured to store instructions executed by the transceiver unit 710 and the processing unit 720. The transceiver unit 710, the processing unit 720, and the storage unit are coupled to each other. The storage unit stores instructions. The processing unit 720 is configured to execute the instructions stored in the storage unit. The transceiver unit 710 is configured to perform specific signal receiving and sending under driving of the processing unit 720.

It should be understood that for a specific process in which the units in the communication apparatus 700 perform the foregoing corresponding steps, refer to the foregoing descriptions related to the terminal device with reference to the signal transmission method and the related embodiment in FIG. 6. For brevity, details are not described herein again.

Optionally, the transceiver unit 710 may include a receiving unit (module) and a sending unit (module), configured to perform the steps of receiving information and sending information by the terminal device in embodiments of the foregoing signal transmission method.

It should be understood that, the transceiver unit 710 may be a transceiver, an input/output interface, or an interface circuit. The storage unit may be a memory. The processing unit 720 may be implemented by a processor. As shown in FIG. 8, a communication apparatus 800 may include a processor 810, a memory 820, a transceiver 830, and a bus system 840. Components in the communication apparatus 800 are coupled together through the bus system 840. **In** addition to a data bus, the bus system 840 may further include a power bus, a control bus, a status signal bus, and the like. However, for clear descriptions, various types of buses in FIG. 8 are marked as the bus system 840. For ease of representation, FIG. 8 shows only an example.

The communication apparatus 700 shown in FIG. 7 or the communication apparatus 800 shown in FIG. 8 can implement the steps performed by the terminal device in embodiments of the foregoing signal transmission method. For similar descriptions, refer to the descriptions in the foregoing corresponding methods. To avoid repetition, details are not described herein again.

The communication apparatus 700 shown in FIG. 7 or the communication apparatus 800 shown in FIG. 8 may be the terminal device.

FIG. 9 is a block diagram of a communication apparatus 900 according to an embodiment of this application. The communication apparatus 900 may correspond to the network side device described in the foregoing signal transmission method, or may be a chip or a component used in the network side device. In addition, each module or unit in the communication apparatus 900 is configured to perform each action or processing process performed by the network side device in the foregoing signal transmission method.

As shown in FIG. 9, the communication apparatus 900 may include a processing unit 910 and a transceiver unit 920. The transceiver unit 920 is configured to perform specific signal receiving and sending under driving of the processing unit 910.

It should be understood that for a specific process in which the units in the communication apparatus 900 perform the foregoing corresponding steps, refer to the foregoing descriptions related to the network side device with reference to the signal transmission method and the related embodiment in FIG. 6. For brevity, details are not described herein again.

Optionally, the transceiver unit 920 may include a receiving unit (module) and a sending unit (module), configured to perform the steps of receiving information and sending information by the network side device in embodiments of the foregoing signal transmission method.

Further, the communication apparatus 900 may include a storage unit. The transceiver unit 920 may be a transceiver, an input/output interface, or an interface circuit. The storage unit is configured to store instructions executed by the transceiver unit 920 and the processing unit 910. The transceiver unit 920, the processing unit 910, and the storage unit are coupled to each other. The storage unit stores instructions. The processing unit 910 is configured to execute the instructions stored in the storage unit. The transceiver unit 920 is configured to perform specific signal receiving and sending under driving of the processing unit 910.

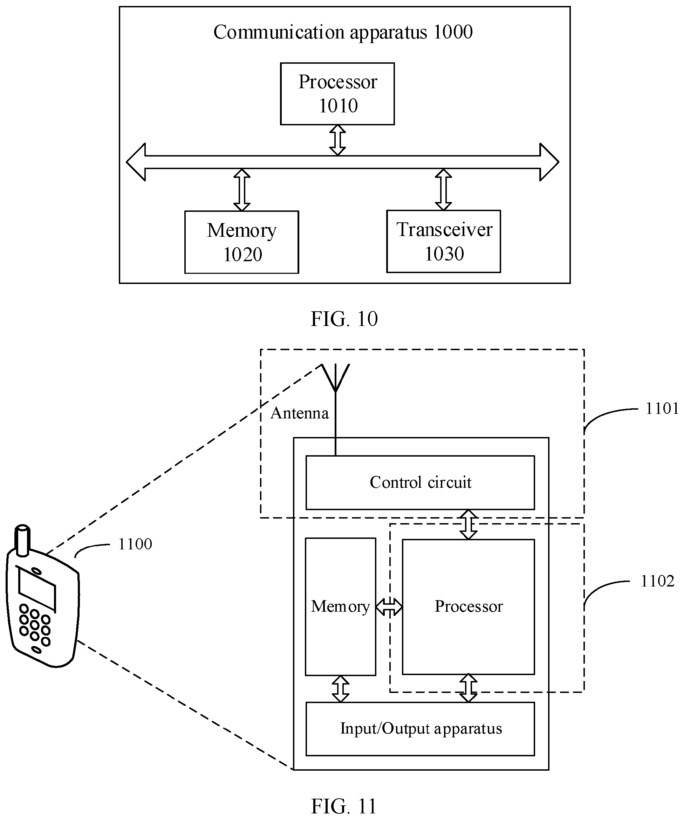

It should be understood that the transceiver unit 920 may be a transceiver, an input/output interface, or an interface circuit. The storage unit may be a memory. The processing unit 910 may be implemented by a processor. As shown in FIG. 10, a communication apparatus 1000 may include a processor 1010, a memory 1020, and a transceiver 1030.

The communication apparatus 900 shown in FIG. 9 or the communication apparatus 1000 shown in FIG. 10 can implement the steps performed by the network side device in embodiments of the foregoing signal transmission method. For similar descriptions, refer to the descriptions in the foregoing corresponding methods. To avoid repetition, details are not described herein again.

It should be further understood that the communication apparatus 900 shown in FIG. 9 or the communication apparatus 1000 shown in FIG. 10 may be the network side device.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in a form of software invoked by the processing element.

In an example, a unit in any one of the foregoing apparatuses may be one or more integrated circuits configured to implement the foregoing method, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms. For another example, when the unit in the apparatus is implemented in a form in which a processing element schedules a program, the processing element may be a general-purpose processor, for example, a central processing unit (central processing unit, CPU) or another processor that can invoke the program. For still another example, the units may be integrated and implemented in a form of a system-on-a-chip (system-on-a-chip, SoC).

FIG. 11 is a diagram of a structure of a terminal device 1100 according to this application. The communication apparatus 700 or the communication apparatus 800 may be configured in the terminal device 1100. Alternatively, the communication apparatus 1000 or the communication apparatus 700 may be the terminal device 1100. In other words, the terminal device 1100 may perform actions performed by the terminal device in the method 600 to the method 900. Optionally, for ease of description, FIG. 11 shows only main components of the terminal device. As shown in FIG. 11, the terminal device 1100 includes a processor, a memory, a control circuit, an antenna, and an input/output apparatus.

The processor is mainly configured to: process a communication protocol and communication data; control the entire terminal device; execute a software program; and process data of the software program. For example, the processor is configured to support the terminal device in performing actions described in the foregoing signal transmission method embodiments. The memory is mainly configured to store the software program and the data, for example, store the antenna port indication table described in the foregoing embodiments. The control circuit is mainly configured to: perform conversion between a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, like a touchscreen, a display, or a keyboard, is mainly configured to: receive data input by a user and output data to the user.

After the terminal device is powered on, the processor may read the software program in a storage unit, interpret and execute instructions of the software program, and process data of the software program. When data needs to be sent wirelessly, the processor performs baseband processing on the to-be-sent data, and outputs a baseband signal to a radio frequency circuit. After performing radio frequency processing on the baseband signal, the radio frequency circuit sends, through the antenna, a radio frequency signal to the outside in a form of an electromagnetic wave. When data (for example, the foregoing first information) is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 11 shows only one memory and one processor. In an actual terminal device, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 11 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

For example, in this embodiment of this application, the antenna and the control circuit that have a transceiver function may be considered as a transceiver unit 1101 of the terminal device 1100, and the processor that has a processing function may be considered as a processing unit 1102 of the terminal device 1100. As shown in FIG. 11, the terminal device 1100 includes the transceiver unit 1101 and the processing unit 1102. The transceiver unit may also be referred to as a transceiver, a transceiver machine, a transceiver apparatus, or the like. Optionally, a component that is in the transceiver unit 1101 and that is configured to implement a receiving function may be considered as a receiving unit, and a component that is in the transceiver unit 1101 and that is configured to implement a sending function may be considered as a sending unit. In other words, the transceiver unit 1101 includes the receiving unit and the sending unit. For example, the receiving unit may also be referred to as a receiver machine, a receiver, a receiving circuit, or the like. The sending unit may be referred to as a transmitter machine, a transmitter, a transmitting circuit, or the like.

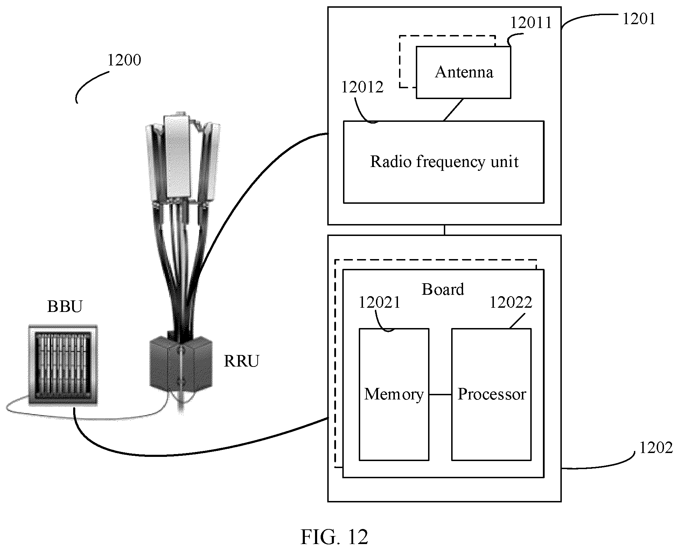

FIG. 12 is a diagram of a structure of a network side device 1200 according to an embodiment of this application. The network side device 1200 may be configured to implement functions of the network side device in the foregoing method. The network side device 1200 includes one or more radio frequency units, such as a remote radio unit (remote radio unit, RRU) 1201 and one or more baseband units (baseband units, BBUs) (which may also be referred to as a digital unit, digital unit, DU) 1202. The RRU 1201 may be referred to as a transceiver unit, a transceiver machine, a transceiver circuit, a transceiver, or the like, and may include at least one antenna 12011 and a radio frequency unit 12012. The RRU 1201 is mainly configured to: receive and send a radio frequency signal, and perform conversion between a radio frequency signal and a baseband signal, for example, is configured to send a signaling message in the foregoing embodiments to a terminal device. The BBU 1202 is mainly configured to perform baseband processing, control a base station, and the like. The RRU 1201 and the BBU 1202 may be physically disposed together, or may be physically disposed separately, in other words, in a distributed base station.

The BBU 1202 is a control center of the base station, may also be referred to as a processing unit, and is mainly configured to perform baseband processing functions such as channel coding, multiplexing, modulation, or spreading. For example, the BBU (the processing unit) 1202 may be configured to control the base station to perform an operation procedure related to the network side device in the foregoing method embodiments.

In an example, the BBU 1202 may include one or more boards. A plurality of boards may jointly support a radio access network (for example, an LTE system or a 5G system) of a single access standard, or may respectively support radio access networks of different access standards. The BBU 1202 further includes a memory 12021 and a processor 12022. The memory 12021 is configured to store necessary instructions and necessary data. For example, the memory 12021 stores the antenna port indication table and the like in the foregoing embodiments. The processor 12022 is configured to control the base station to perform a necessary action, for example, configured to control the base station to perform an operation procedure related to the network side device in the foregoing method embodiments. The memory 12021 and the processor 12022 may serve one or more boards. In other words, a memory and a processor may be disposed on each board. Alternatively, a plurality of boards may share a same memory and a same processor. In addition, a necessary circuit may further be disposed on each board.

In a possible implementation, with development of a system-on-a-chip (System-on-a-chip, SoC) technology, all or some functions of the part 1202 and the part 1201 may be implemented by using the SoC technology, for example,

## EP 4 572 277 A1

implemented by using a base station function chip. The base station function chip integrates components such as a processor, a memory, and an antenna interface. A program used to perform a related function of the base station is stored in the memory. The processor executes the program to implement the related function of the base station. Optionally, the base station function chip can also read an external memory of the chip, to implement the related function of the base station.

It should be understood that the structure of the network side device shown in FIG. 12 is merely a possible form, but should not constitute any limitation on embodiments of this application. In this application, a possibility that there may be a base station structure in another form in the future is not excluded.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When the software is used to implement embodiments, all or some of the foregoing embodiments may be implemented in a form of a computer program product. The computer program product includes one or more computer instructions or computer programs. When the computer instructions or the computer programs are loaded or executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a communication system. The communication system includes the foregoing terminal device and the foregoing network side device.

An embodiment of this application further provides a computer-readable medium, configured to store computer program code. The computer program includes instructions used to perform the signal transmission method provided in the signal transmission method described above. The readable medium may be a read-only memory (read-only memory, ROM) or a random access memory (random access memory, RAM). This is not limited in embodiments of this application.

This application further provides a computer program product. The computer program product includes instructions. When the instructions are executed, a terminal device is enabled to perform an operation of the terminal device corresponding to the foregoing method, or a network side device is enabled to perform an operation of the network side device corresponding to the foregoing method.

An embodiment of this application further provides a system chip. The system chip includes a processing unit and a communication unit. The processing unit may be, for example, a processor, and the communication unit may be, for example, an input/output interface, a pin, a circuit, or the like. The processing unit may execute computer instructions, so that a chip in the communication apparatus performs any signal transmission method provided in embodiments of this application.

Optionally, any communication apparatus provided in embodiments of this application may include the system chip.

Optionally, the computer instructions are stored in a storage unit.

Optionally, the storage unit is a storage unit in the chip, for example, a register or a cache. Alternatively, the storage unit may be a storage unit that is in a terminal and that is located outside the chip, for example, a ROM or another type of static storage device that can store static information and instructions, or a RAM. The processor described above may be a CPU, a microprocessor, an ASIC, or one or more integrated circuits configured to control execution of a program for the foregoing master system information transmission method. The processing unit and the storage unit may be decoupled, are disposed on different physical devices respectively, and are connected in a wired or wireless manner to implement respective functions of the processing unit and the storage unit, to support the system chip in implementing various functions in the foregoing embodiments. Alternatively, the processing unit and the memory may be coupled to a same device.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The terms "system" and "network" may be used interchangeably in this specification. The term "and/or" in this specification describes only an association relationship between associated objects and represents that three relationships may exist. For example, A and/or B may represent the following three cases: Only A exists, both A and B exist, and only B exists. In addition, the character "/" in this specification generally represents an "or" relationship between the associated objects.

The term "uplink" and "downlink" in this application are used to describe a data/information transmission direction in a specific scenario. For example, an "uplink" direction is generally a direction in which data/information is transmitted from a terminal to a network side, or a direction in which data/information is transmitted from a distributed unit to a central unit; and a "downlink" direction is generally a direction in which data/information is transmitted from a network side to a terminal, or a direction in which data/information is transmitted from a central unit to a distributed unit. It can be understood that "uplink" and "downlink" are merely used to describe a data/information transmission direction, without limiting specific starting and ending devices of data/information transmission.

In this application, names may be assigned to various objects such as messages/information/devices/network elements/systems/apparatuses/actions/operations/procedures/concepts. It can be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

A person of ordinary skill in the art may be aware that all or some of the methods in embodiments of this application may be implemented by using software, hardware, firmware, or any combination thereof. When the software is used to implement embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, or another programmable apparatus. The computer programs or the instructions may be stored in a computer-readable storage medium, or may be transmitted by using the computer-readable storage medium. The computer-readable storage medium may be any usable medium accessible by the computer, or a data storage device, for example, a server, integrating one or more usable media.

It may be clearly understood by a person skilled in the art that, for the purpose of convenient and brief description, for a detailed operating process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, in other words, may be located in one location, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, or a network side device) to perform all or some of the steps of the methods described in embodiments of this application. The storage medium includes a USB flash drive, a removable hard disk, a read-only memory (read-only memory, ROM), or random access.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal transmission method, applied to a network side device, wherein the method comprises:

   sending first downlink control information to a first terminal device, wherein the first downlink control information is used by the first terminal device to determine a first port and a first physical resource, and the first port is used by the first terminal device to transmit a first reference signal on the first physical resource;
   sending second downlink control information to a second terminal device, wherein the second downlink control information is used by the second terminal device to determine a second port and a second physical resource, and the second port is used by the second terminal device to transmit a second reference signal on the second physical resource, wherein
   the first port uses a first orthogonal code, the second port uses a second orthogonal code, the second orthogonal code comprises m code values, the first orthogonal code comprises n sub-orthogonal codes, each of the n sub-orthogonal codes comprises m code values, the n sub-orthogonal codes are separately orthogonal to the second orthogonal code, n is a positive integer greater than or equal to 2, and m is a positive integer greater than or equal to 2; and
   transmitting the first reference signal on the first physical resource, and transmitting the second reference signal on the second physical resource.

2. The method according to claim 1, wherein the first orthogonal code is a first frequency division orthogonal code, and the second orthogonal code is a second frequency division orthogonal code; or
   the first orthogonal code is a first time division orthogonal code, and the second orthogonal code is a second time division orthogonal code.

3. The method according to claim 1, wherein the first orthogonal code comprises a first frequency division orthogonal code and a first time division orthogonal code, and the second orthogonal code comprises a second frequency division orthogonal code and a second time division orthogonal code.

4. The method according to claim 3, wherein the first time division orthogonal code is the same as the second time division orthogonal code; or
   the first frequency division orthogonal code is the same as the second frequency division orthogonal code.

5. The method according to any one of claims 1 to 4, wherein the first physical resource and the second physical resource are same physical resources or different physical resources.

6. The method according to claim 5, wherein if the first physical resource and the second physical resource are the same physical resources, each of the n sub-orthogonal codes needs to be orthogonal to the second orthogonal code.

7. The method according to any one of claims 1 to 6, wherein the n sub-orthogonal codes in the first orthogonal code are same codes or different codes.

8. The method according to any one of claims 1 to 7, wherein the second orthogonal code is orthogonal to (m-1) second candidate codes, each second candidate code comprises m code values, and each of the n sub-orthogonal codes is any one of the (m-1) second candidate codes.

9. The method according to any one of claims 1 to 8, wherein m=2, n=2, the second orthogonal code is {+1, +1}, and the first orthogonal code is {+1, -1, +1, -1}, or the first orthogonal code is {+1, -1, -1, +1}.

10. The method according to any one of claims 1 to 8, wherein m=2, n=2, the second orthogonal code is {+1, -1}, and the first orthogonal code is {+1, +1, +1, +1}, or the first orthogonal code is {+1, +1, -1, -1}.

11. The method according to any one of claims 1 to 8, wherein m=2, n=2, the second orthogonal code is {+1, +1}, and the first orthogonal code is {+1, -1, +1, -1}; or
the second orthogonal code is {+1, -1}, and the first orthogonal code is {+1, +1, +1, +1}.

12. The method according to any one of claims 1 to 11, wherein both the first reference signal and the second reference signal are demodulation reference signals DMRSs.

13. The method according to any one of claims 1 to 12, wherein the method further comprises:

receiving first capability information sent by the first terminal device, wherein the first capability information indicates whether the first terminal device supports scheduling of the first port and the second port on a same physical resource; or
receiving second capability information sent by the second terminal device, wherein the second capability information indicates whether the second terminal device supports scheduling of the first port and the second port on a same physical resource.

14. The method according to claim 13, wherein if the first terminal device or the second terminal device does not support scheduling of the first port and the second port on the same physical resource, the first orthogonal code and the second orthogonal code satisfy the following condition: the n sub-orthogonal codes are separately orthogonal to the second orthogonal code.

15. A signal transmission method, applied to a third terminal device, wherein the method comprises:

receiving downlink control information sent by a network side device;
determining a third port and a third physical resource based on the downlink control information; and
transmitting a third reference signal on the third physical resource by using the third port, wherein
a fourth physical resource carries a fourth reference signal transmitted by a fourth terminal device by using a fourth port; and
the third port uses a first orthogonal code, and the fourth port uses a second orthogonal code; or the third port uses the second orthogonal code, and the fourth port uses the first orthogonal code; and the second orthogonal code comprises m code values, the first orthogonal code comprises n sub-orthogonal codes, each of the n sub-orthogonal codes comprises m code values, the n sub-orthogonal codes are separately orthogonal to the second orthogonal code, n is a positive integer greater than or equal to 2, and m is a positive integer greater than or equal to 2.

16. The method according to claim 15, wherein the first orthogonal code is a first frequency division orthogonal code, and the second orthogonal code is a second frequency division orthogonal code; or
the first orthogonal code is a first time division orthogonal code, and the second orthogonal code is a second time division orthogonal code.

17. The method according to claim 15, wherein the first orthogonal code comprises a first frequency division orthogonal code and a first time division orthogonal code, and the second orthogonal code comprises a second frequency division orthogonal code and a second time division orthogonal code.

18. The method according to claim 17, wherein the first time division orthogonal code is the same as the second time division orthogonal code; or
the first frequency division orthogonal code is the same as the second frequency division orthogonal code.

19. The method according to any one of claims 15 to 18, wherein the third physical resource and the fourth physical resource are same physical resources or different physical resources.

20. The method according to claim 19, wherein if the third physical resource and the fourth physical resource are the same physical resources, each of the n sub-orthogonal codes needs to be orthogonal to the second orthogonal code.

21. The method according to any one of claims 15 to 20, wherein the n sub-orthogonal codes in the first orthogonal code are same codes or different codes.

22. The method according to any one of claims 15 to 21, wherein the second orthogonal code is orthogonal to (m-1) second candidate codes, each second candidate code comprises m code values, and each of the n sub-orthogonal codes is any one of the (m-1) second candidate codes.

23. The method according to any one of claims 15 to 22, wherein m=2, n=2, the second orthogonal code is {+1, +1}, and the first orthogonal code is {+1, -1, +1, -1}, or the first orthogonal code is {+1, -1, -1, +1}.

24. The method according to any one of claims 15 to 22, wherein m=2, n=2, the second orthogonal code is {+1, -1}, and the first orthogonal code is {+1, +1, +1, +1}, or the first orthogonal code is {+1, +1, -1, -1}.

25. The method according to any one of claims 15 to 22, wherein m=2, n=2, the second orthogonal code is {+1, +1}, and the first orthogonal code is {+1, -1, +1, -1}; or
the second orthogonal code is {+1, -1}, and the first orthogonal code is {+1, +1, +1, +1}.

26. The method according to any one of claims 15 to 25, wherein both the third reference signal and the fourth reference signal are demodulation reference signals DMRSs.

27. The method according to any one of claims 15 to 26, wherein the method further comprises:
sending capability information to the network side device, wherein the capability information indicates whether the third terminal device supports scheduling of the third port and the fourth port on a same physical resource.

28. A communication apparatus, configured to perform the method according to any one of claims 1 to 27.

29. A computer-readable storage medium, wherein the computer-readable storage medium stores a computer program or instructions, and when a computer reads and executes the computer program or the instructions, the computer is enabled to perform the method according to any one of claims 1 to 27.

30. A chip, comprising a processor, configured to invoke a computer program from a memory and run the computer program, to enable a communication device on which the chip is installed to perform the method according to any one of claims 1 to 27.

RB

RE

Subcarrier (frequency domain)

OCC with a length of 2 in frequency domain

1000

CDM group 0

1001

1002

CDM group 1

1003

Symbol (time domain)

RE to which a DMRS sequence is mapped

FIG. 1

RB

RE

Symbol 1
Symbol 2

RE 10
RE 8
RE 6
RE 4
RE 2
RE 0

OCC with a length of 2 in frequency domain and time domain

1000

CDM group 0

1001

1002

CDM group 1

1003

Subcarrier (frequency domain)

1004

CDM group 0

1005

1006

CDM group 1

1007

Symbol (time domain)

RE to which a DMRS sequence is mapped

FIG. 2

RB

RE

Subcarrier
(frequency
domain)

OCC with a
length of 2
in frequency
domain

CDM
group 0

1000

1001

CDM
group 1

1002

1003

CDM
group 2

1004

1005

Symbol (time domain)

RE to which a DMRS
sequence is mapped

FIG. 3

FIG. 4

Transmit end device

Receive end device

FIG. 5

**600**

| Network side device | First terminal device | Second terminal device |
|---|---|---|

S610: First downlink control information

S620: Second downlink control information

S630: Determine a first port and a first physical resource based on the first downlink control information

S650: Determine a second port and a second physical resource based on the second downlink control information

S640: The network side device and the first terminal device transmit a first reference signal on the first physical resource by using the first port

S660: The network side device and the second terminal device transmit a second reference signal on the second physical resource by using the second port

FIG. 6

Communication apparatus 700

Transceiver unit 710

Processing unit 720

FIG. 7

810

Processor

840

Bus system

830

Transceiver

820

Memory

Communication
apparatus 800

FIG. 8

Communication apparatus 900

Processing unit 910

Transceiver unit 920

FIG. 9

Communication apparatus 1000

Processor
1010

Memory
1020

Transceiver
1030

FIG. 10

Antenna

Control circuit

Memory

Processor

Input/Output apparatus

1101

1102

1100

FIG. 11

FIG. 12

## INTERNATIONAL SEARCH REPORT

| International application No. |
| --- |
| **PCT/CN2023/121530** |

**A. CLASSIFICATION OF SUBJECT MATTER**

H04L27/26(2006.01)i; H04W4/00(2018.01)i

According to International Patent Classification (IPC) or to both national classification and IPC

**B. FIELDS SEARCHED**

Minimum documentation searched (classification system followed by classification symbols)

IPC:H04L27/-; H04W4/-

Documentation searched other than minimum documentation to the extent that such documents are included in the fields searched

Electronic data base consulted during the international search (name of data base and, where practicable, search terms used)

CNABS, CNTXT, CNKI, 万方, WANGANG, VEN, EPTXT, USTXT, WOTXT, 3GPP: 正交, 沃尔什码, 循环移位码, CS码, 长度, 协议, 端口, 调度, 参考信号, 解调参考信号, 下行控制信息, 子序列, 子正交码, 子组; orthogonal, OCC, walsh, cyclic shift, length, protocol, port, schedul+, DMRS, demodulation reference signal, DCI, Downlink Control Information, Subsequence

**C. DOCUMENTS CONSIDERED TO BE RELEVANT**

| Category* | Citation of document, with indication, where appropriate, of the relevant passages | Relevant to claim No. |
| --- | --- | --- |
| Y | WO 2018170842 A1 (GUANGDONG OPPO MOBILE TELECOMMUNICATIONS CORP., LTD.) 27 September 2018 (2018-09-27) claims 1-5 and 15, and description, page 21, line 27 to page 23, line 10 | 1-30 |
| Y | CN 105281813 A (CHINA MOBILE COMMUNICATIONS CORP.) 27 January 2016 (2016-01-27) description, paragraphs [0028]-[0049] | 1-30 |
| A | CN 110166194 A (HUAWEI TECHNOLOGIES CO., LTD.) 23 August 2019 (2019-08-23) entire document | 1-30 |
| A | CN 102869096 A (ALCATEL-LUCENT SHANGHAI BELL CO., LTD.) 09 January 2013 (2013-01-09) entire document | 1-30 |
| A | SPREADTRUM COMMUNICATIONS. "R1-1707784 "On front-loaded DMRS pattern and port multiplexing"" *3GPP tsg_ran\WG1_RL1*, No. TSGR1_89, 06 May 2017 (2017-05-06), entire document | 1-30 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 December 2023** | **19 December 2023** |

| Name and mailing address of the ISA/CN | Authorized officer |
| --- | --- |
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/121530**

| Patent document cited in search report | | | Publication date (day/month/year) | Patent family member(s) | | | Publication date (day/month/year) |
|---|---|---|---|---|---|---|---|
| WO | 2018170842 | A1 | 27 September 2018 | CN | 110431818 | A | 08 November 2019 |
| | | | | US | 2020252191 | A1 | 06 August 2020 |
| | | | | US | 11310019 | B2 | 19 April 2022 |
| | | | | US | 2022200775 | A1 | 23 June 2022 |
| | | | | EP | 3605988 | A1 | 05 February 2020 |
| | | | | EP | 3605988 | A4 | 18 March 2020 |
| | | | | EP | 3605988 | B1 | 12 May 2021 |
| | | | | EP | 3863258 | A1 | 11 August 2021 |
| | | | | EP | 3863258 | B1 | 06 September 2023 |
| | | | | JP | 2020516143 | A | 28 May 2020 |
| | | | | JP | 7266529 | B2 | 28 April 2023 |
| | | | | KR | 20190126118 | A | 08 November 2019 |
| | | | | KR | 102364119 | B1 | 17 February 2022 |
| | | | | US | 11757603 | B2 | 12 September 2023 |
| CN | 105281813 | A | 27 January 2016 | CN | 105281813 | B | 26 October 2018 |
| CN | 110166194 | A | 23 August 2019 | WO | 2019154425 | A1 | 15 August 2019 |
| | | | | EP | 3739800 | A1 | 18 November 2020 |
| | | | | US | 2020374097 | A1 | 26 November 2020 |
| CN | 102869096 | A | 09 January 2013 | CN | 102869096 | B | 18 May 2016 |

Form PCT/ISA/210 (patent family annex) (July 2022)

**EP 4 572 277 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211216529